# EUROPEAN PATENT APPLICATION

(11) **EP 4 625 903 A1**
(43) Date of publication of application: **01.10.2025**
(21) Application number: 22966143.4
(22) Date of filing: 23.11.2022
(51) Int. Cl.: H04L 27/00

(54) **CONTENTION ACCESS METHOD AND APPARATUS FOR SECONDARY CHANNEL, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); ZHOU, Pei, Dongguan, Guangdong 523860 (CN); LU, Liuming, Dongguan, Guangdong 523860 (CN); LI, Yapu, Dongguan, Guangdong 523860 (CN)
(74) Representative: Novagraaf Technologies
(86) International application number: PCT/CN2022/133836
(87) International publication number: WO 2024/108448

(57) **Abstract**

The present application relates to the field of communications, and discloses a contention access method and apparatus for a secondary channel, a device, and a medium. The method comprises: after receiving channel occupation information exchanged by a second wireless device on a primary channel, contending for accessing the secondary channel in an idle state on the basis of a secondary channel access mode, wherein the primary channel and the secondary channel are a set of mutually bonded channels. Under the condition that the channel occupation information is exchanged on the primary channel, a first wireless device can still contend for accessing the secondary channel in the idle state, thus avoiding the waste of resources of the secondary channel, additionally, how to perform channel contention access is specified in said secondary channel access mode.

## Description

### TECHNICAL FIELD

Embodiments of the present disclosure relate to the field of wireless communications, and in particular, relate to a method and apparatus for contention-based access to a secondary channel, and a device and a storage medium thereof.

### RELATED ART

In some practices, in a case where the primary channel is busy, a wireless device is unable to use a secondary channel separately for wireless transmission, such that a serious waste of secondary channel frequency field resources is caused.

Accordingly, how to use the secondary channel frequency field resources for transmission in a case where the primary channel is busy is an urgent problem to be solved.

### SUMMARY

Embodiments of the present disclosure provide a method and apparatus for contention-based access to a secondary channel, and a device and a storage medium thereof. The technical solutions are as follows.

According to an aspect of the embodiments of the present disclosure, a method for contention-based access to a secondary channel is provided. The method is applicable to a first wireless device, and includes:
contending for access to the secondary channel in an idle state based on a secondary channel access mode upon receiving channel occupancy information interacted by a second wireless device on a primary channel,
wherein the primary channel and the secondary channel are a group of bound channels.

According to an aspect of the embodiments of the present disclosure, a method for contention-based access to a secondary channel is provided. The method is applicable to a second wireless device, and includes:
transmitting a management frame to a first wireless device, wherein the management frame indicates and/or changes a secondary channel access mode.

According to an aspect of the embodiments of the present disclosure, an apparatus for contention-based access to a secondary channel is provided. The apparatus includes:
a first receiving module, configured to contend for access to the secondary channel in an idle state based on a secondary channel access mode upon receiving channel occupancy information interacted by a second wireless device on a primary channel,
wherein the primary channel and the secondary channel are a group of bound channels.

According to an aspect of the embodiments of the present disclosure, an apparatus for contention-based access to a secondary channel is provided. The apparatus includes:
a first transmitting module, configured to transmit a management frame to a first wireless device, wherein the management frame indicates and/or changes a secondary channel access mode.

According to an aspect of the embodiments of the present disclosure, a wireless device is provided. The wireless device includes: a processor; a transceiver connected to the processor; and a memory configured to store one or more executable instructions by the processor; wherein the processor is configured to load and execute the one or more executable instructions to cause the wireless device to perform the method for contention-based access to the secondary channel according to above aspects.

According to an aspect of the embodiments of the present disclosure, a computer-readable storage medium is provided. The computer-readable storage medium stores one or more executable instructions, wherein the one or more runnable instructions, when loaded and run by a processor, cause the processor to perform the method for contention-based access to the secondary channel according to above aspects.

According to an aspect of the embodiments of the present disclosure, a computer program product is provided. The computer program product includes one or more computer instructions, wherein the one or more computer instructions are stored in a computer-readable storage medium, and when read and executed by a processor of a computer device, cause the computer device to perform the method for contention-based access to the secondary channel according to above aspects.

According to an aspect of the embodiments of the present disclosure, a chip is provided. The chip includes programmable logical circuity and/or one or more program instructions, wherein the chip is configured to perform the method for contention-based access to the secondary channel according to above aspects.

According to an aspect of the embodiments of the present disclosure, a computer program is provided. The computer program includes one or more computer instructions, wherein the one or more computer instructions are stored in a computer-readable storage medium, and when read and executed by a processor of a computer device, cause the computer device to perform the method for contention-based access to the secondary channel according to above aspects.

The technical solutions according to the embodiments of the present disclosure achieve the following technical effects.

In a case where the second wireless device interacts channel occupancy information on the primary channel, the first wireless device still contends for access to the secondary channel in the idle state to avoid waste of secondary channel resources. In addition, the secondary channel access mode clearly defines how to contend for access to the channel.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a method of enhanced distributed channel access (EDCA) in some practices;
FIG. 2 is a schematic diagram of a method of EDCA in some practices;
FIG. 3 is a schematic diagram of a method of orthogonal frequency division multiple access (OFDMA) backoff (OBO) in some practices;
FIG. 4 is a schematic diagram of request-to-send (RTS)/clear-to-send (CTS) interaction in some practices;
FIG. 5 is a schematic diagram of a wireless fidelity (Wi-Fi) system according to some embodiments of the present disclosure;
FIG. 6 is a flowchart of a method for contention-based access to a secondary channel according to some embodiments of the present disclosure;
FIG. 7 is a flowchart of a method for contention-based access to a secondary channel according to some embodiments of the present disclosure;
FIG. 8 is a schematic diagram of a method for contention-based access to a secondary channel according to some embodiments of the present disclosure;
FIG. 9 is a schematic diagram of a method for contention-based access to a secondary channel according to some embodiments of the present disclosure;
FIG. 10 is a schematic diagram of a method for contention-based access to a secondary channel according to some embodiments of the present disclosure;
FIG. 11 is a schematic diagram of a method for contention-based access to a secondary channel according to some embodiments of the present disclosure;
FIG. 12 is a schematic diagram of a method for contention-based access to a secondary channel according to some embodiments of the present disclosure;
FIG. 13 is a schematic diagram of a method for contention-based access to a secondary channel according to some embodiments of the present disclosure;
FIG. 14 is a flowchart of a method for contention-based access to a secondary channel according to some embodiments of the present disclosure;
FIG. 15 is a schematic diagram of a format of a Secondary Channel Access Mode Indication element according to some embodiments of the present disclosure;
FIG. 16 is a block diagram of an apparatus for contention-based access to a secondary channel according to some embodiments of the present disclosure;
FIG. 17 is a block diagram of an apparatus for contention-based access to a secondary channel according to some embodiments of the present disclosure; and
FIG. 18 is a schematic structural diagram of a wireless communication device according to some embodiments of the present disclosure.

### DETAILED DESCRIPTION

For clearer descriptions of the objectives, technical solutions, and advantages of the present disclosure, embodiments of the present disclosure are further described in detail below with reference to the accompanying drawings. The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, and such information should not be limited to these terms. These terms are only used to distinguish one type of information from another. For example, a first parameter may also be referred to as a second parameter, and similarly, a second parameter is also referred to as a first parameter, without departing from the scope of the present disclosure. The word "if," as used herein, may be interpreted as "in a case where," "in a case that," "in the case of," or "in response to determining that," depending on the context.

Some related technologies involved in the embodiments of the present disclosure are described as follows.

### (1) EDCA

With increasing types and complex requirements of internet traffics, requirements for the network performance are higher. For the quality of service (QoS) support for transmission of the internet traffic at a medium access control (MAC) layer, the EDCA is used to provide the priority support and avoid channel access collision in some practices. The EDCA may provide channel access transmission services with different priorities for different traffics, and provide different channel access priority supports for different traffics.

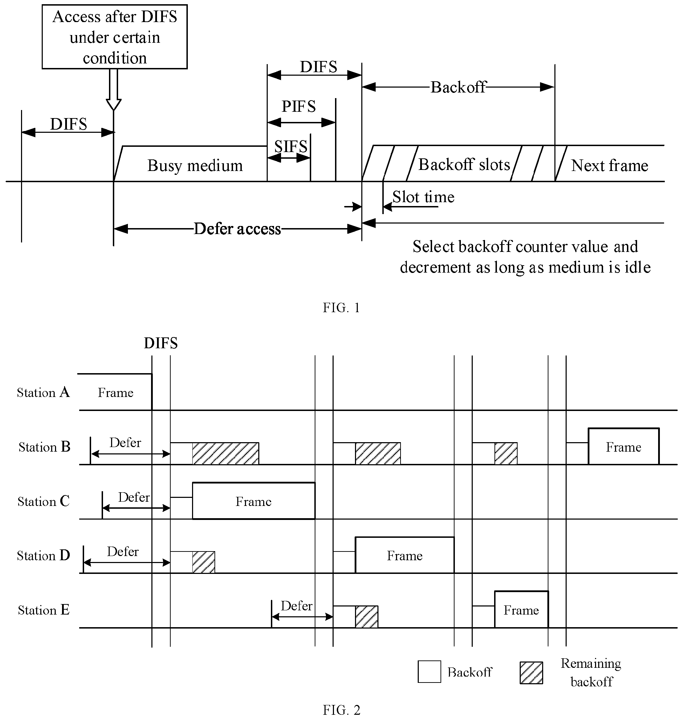

A basic channel access method related to the EDCA is shown in FIG. 1. In a case where a station (STA) detects that a channel changes from a busy state to an idle state in clear channel assessment (CCA), the station needs to detect whether the channel keeps the idle state within a distributed coordination function interframe space (DIFS) time. In a case where the channel keeps the idle state within the DIFS time, the station performs a backoff process. In a case where the station enters the backoff process, the station needs to select a random number from a contention window (CW), and the value is referred to as a random backoff counter value. During the backoff process, each slot station detects the channel, and a corresponding random backoff counter value is decreased by 1 in a case where the channel is idle. In a case where the current random backoff counter value is 0, the station acquires a channel access right and immediately transmits and resets the random backoff counter value. In a case where the current random backoff counter value is not 0, the station continues to detect whether the channel keeps the idle state until the random backoff counter value of the station is 0, and the station acquires the channel access right and immediately transmits and resets the random backoff counter value. In a case where another station gains the channel first during the backoff process, that is, the random backoff counter value of the another station first decreases to 0, the random backoff counter value of the station that does not gain the channel keeps unchanged. The random backoff counter value of the station that does not gain the channel decreases by 1 from the previous value until it is 0 in the next time that the channel changes from the busy state to the idle state in the CCA, which is for ensuring fairness in network transmission.

Furthermore, in simple terms, the improved channel access method related to the EDCA is that the EDCA provides the channel access transmission services with different priorities for different traffics. Specifically, each station determines a corresponding CW[AC] based on an access category (AC) of a to-be-transmitted traffic, and an initial value of the CW[AC] is a corresponding CWmin[AC] value. The EDCA defines four ACs for traffics with priorities from high to low, that is, voice (AC_VO), video (AC_VI), best effort (AC_BE), and background (AC_BK). Each AC contends for transmission opportunities using the improved EDCA. A frame of the AC with a highest priority has a smallest CW value, and thus acquires the transmission opportunity more likely.

Illustratively, as shown in FIG. 2, transmission of a station A over the channel is about to end, a station B, a station C, and a station D need to transmit data, and the channel changes from the busy state to the idle state in the CCA. The station B, the station C, and the station D continue to detect whether the channel keeps the idle state within the DIFS time, and the detection result indicates that the channel is in the idle state within the DIFS time. The station B, the station C, and the station D each randomly select a random backoff counter value. The random backoff counter value of the station B is 4, the random backoff counter value of the station C is 1, and the random backoff counter value of the station D is 2. During the backoff process, the station B, the station C, and the station D detect whether the channel is idle with a unit of a time slot. In a case where the channel is idle in the first time slot, the random backoff counter values of the station B, the station C, and the station D are decreased by 1. That is, the random backoff counter value of the station B is 3, the random backoff counter value of the station C is 0, and the random backoff counter value of the station D is 1. The random backoff counter value of the station C is 0, and thus the station C acquires the channel access right, and immediately transmits data and resets the random backoff counter value (not shown in the drawing). In a case where the station B and the station D know that the station C gains the channel, the random backoff counter values of the station B and the station D keep unchanged. In a case where the transmission of the station C on the channel is about to end, and the station B, the station D, and the station E need to transmit data, and the channel changes from the busy state to the idle state in the CCA, the station B, the station D, and the station E continue to detect whether the channel keeps the idle state within the DIFS time, and the detection result indicates that the channel is in the idle state within the DIFS time. The station B and the station D use the previous random backoff counter values, that is, the random backoff counter value of the station B is still 3, the random backoff counter value of the station D is still 1, and a random backoff counter value of 2 is randomly selected for the station E. During the backoff process, the station B, the station D, and the station E detect whether the channel is idle with a unit of a time slot. In a case where the channel is idle in the first time slot, the random backoff counter values of the station B, the station D, and the station E are decreased by 1. That is, the random backoff counter value of the station B is 2, the random backoff counter value of the station D is 0, and the random backoff counter value of the station E is 1. The random backoff counter value of the station D is 0, and thus the station D acquires the channel access right and immediately transmits data and resets the random backoff counter value (not shown in the drawing). In a case where the station B and the station E know that the station D gains the channel, the random backoff counter values of the station B and the station E keep unchanged, the station B and the station E wait for the next time that the channel changes from the busy state to the idle state in the CCA, and the previous backoff process is repeated until the station E gains the channel and the station B gains the channel.

### (2) OFDMA contention window (OCW) and OBO

An access point (AP) divides the channel into a plurality of resource units (RUs) using the OFDMA technology, and different stations occupy different RUs, such that parallel multi-user transmission is achieved. The station contends for the RUs through an uplink OFDMA random access (UORA) mechanism, and frequency domain backoff is achieved using the OBO technology during the UORA process.

Prior to the OBO, the AP shall indicate the range of OCW in the UORA Parameter Set element for non-AP STAs to initiate random access following the trigger frame transmission.

A non-AP high efficiency (HE) STA shall maintain an internal OCW and an internal OBO counter. OCW is an integer in the range OCWmin to OCWmax.

The size of all RA-RUs in the set shall be the same and equal to the size of the RA-RU indicated by the RU Allocation subfield in the User Info field. A non-AP HE STA shall determine the total number of eligible RA-RUs in a contiguous set from the Number Of RA-RU subfields in the User Info field corresponding to an eligible RA-RU, excluding RA-RUs that are not within its operating bandwidth. The contiguous set refers to a contiguous RA-RU set indicated by a specific User Info field in the RU allocation solution, for example, a contiguous RA-RU set indicated by an RU Allocation field.

If an HE STA has a pending frame for the AP upon the reception of a trigger frame containing at least one eligible RA-RU and if the OBO counter of the HE STA is not greater than the number of eligible RA-RUs in a trigger frame from that AP, then the HE STA shall set its OBO counter to zero and randomly select one of the eligible RA-RUs to be considered for transmission. Otherwise, the HE STA decrements its OBO counter by the number of eligible RA-RUs in the trigger frame.

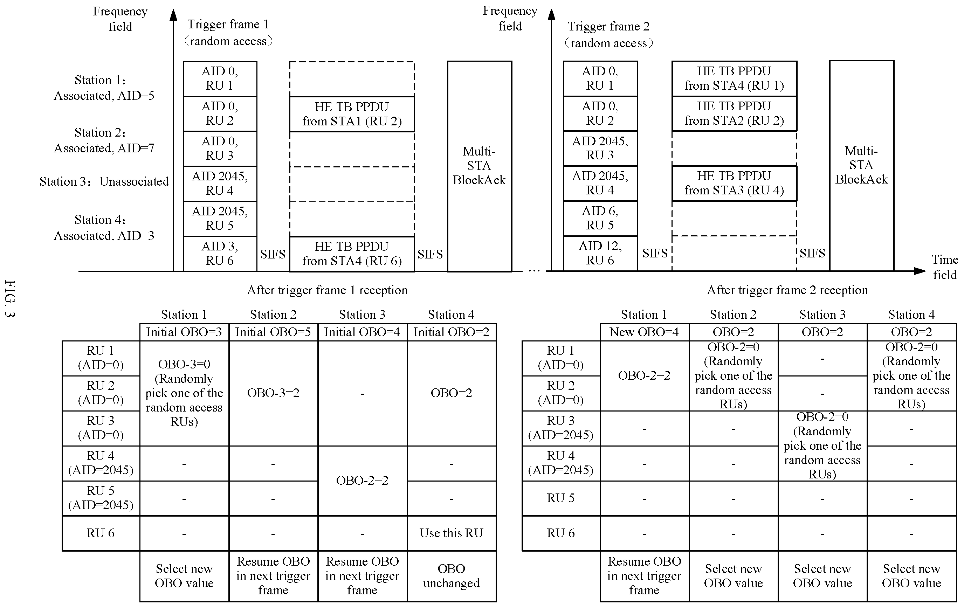

Illustratively, detailed process of the OBO is shown in FIG. 3.

A basic service set (BSS) is a basic topology structure in a wireless local area network (WLAN). Communication devices composed of the BSS include an access point and a plurality of stations. After accessing a wireless field of the access point, each station is associated with the access point, and data is interacted between the stations over the access point. The access point assigns an associated identifier (AID) to each station that joins the BSS, and an AID value of 0 indicates that the device is the access point. FIG. 3 includes four stations, and the station 1, the station 2, and the station 4 are members of the same BSS and each has an AID. The station 3 does not join the BSS, is not associated with the access point, is marked as "Unassociated," and does not have an AID.

The access point transmits a trigger frame, and the trigger frame is used for triggering an OBO random access and contains a number of RUs that can be allocated. A User Info field in the trigger frame includes an AID field, and the AID field indicates the station corresponding to the User Info field. Specifically, in a case where the AID of the User Info field indicates 0, one or more contiguous RUs indicated by the User Info field are used for random access to one or more associated stations (for example, the station 1, the station 2, and the station 4 in FIG. 3 are associated). Specifically, in a case where the AID of the User Info field indicates 2045, one or more contiguous RUs indicated by the User Info field are used for random access to one or more non-associated stations (for example, the station 3 in FIG. 3 is not associated).

In six RUs (the RU1 to the RU6) that can be assigned indicated by the trigger frame 1 in FIG. 3, the RU1 to the RU3 are randomly accessed by associated stations (that is, allowing the station 1, the station 2, and the station 4 to contend for access), the RU4 and the RU5 are randomly accessed by non-associated stations (that is, allowing the station 3 to contend for access), and the RU6 is assigned to a specific station, that is, a station with the AID of 3.

The access point indicates an OCW range (that is, the range determined by an OCWmin and an OCWmax), and each station selects an OCWmin from the OCW range as an initial OCW value. Each station randomly selects an initial OBO counter (that is, the initial OBO value) from a range from 0 to OCW. Each station performs an OBO counter fading at the start of each OBO random access. In a case where the value of the OBO counter of the station is less than or equal to the number of available RUs (RU that can be contended for) in a round (that is, the OBO counter value of the station minus the number of available RUs in the round is less than or equal to 0), the station is successful in the round of contention, and randomly selects an available RU for occupancy. In a case where the OBO counter of the station is greater than the number of available RUs in the round, the OBO counter value of the station minus the number of available RUs in the round is unchanged, and the OBO counter fading is performed in a next round of the OBO, until the OBO counter is 0, that is, is successful in the contention.

In FIG. 3, after receiving the trigger frame 1, the four stations start the OBO random access contention. As the station 4 has been assigned with the RU6, the station 4 does not participate in the round of contention and directly uses the RU6 for data transmission. The OBO counter is unchanged, that is, the OBO counter value of the station 4 (also known as the OBO value) is still the same as the initial OBO counter value (also known as the initial OBO value). The station 1 and the station 2 contend for the RU1 to the RU3, that is, the station 1 and the station 2 contend for three RUs. In a case where the OBO counter of the station 1 is equal to the initial OBO value minus the number of RUs that can be contended, that is, 3-3=0, the station 1 is successful in the round of contention, and randomly selects one RU from the RU1 to the RU3 for data transmission. For example, the station 1 selects the RU2 to transmit an HE trigger based (TB) physical layer protocol data unit (PPDU), and selects a new OBO value within the OCW range, for example, the new OBO value of the station 1 is 4. In a case where the OBO counter of the station 2 is equal to the initial OBO value minus the number of RUs that can be contended, that is, 5-3=2, the station 2 fails in the round, the OBO counter is still 2 until a new round of OBO random access contention begins after receiving a next trigger frame, and the OBO value continues to fade. The station 3 contends for the RU4 and the RU5, that is, the station 3 contends for two RUs. The OBO counter of the station 3 is equal to the initial OBO value minus the number of RUs that can be contended, that is, 4-2=2. In a case where the station fails in the round of contention, the OBO counter is still 2 until a new round of OBO random access contention begins after receiving a next trigger frame, and the OBO value continues to fade. After receiving the uplink TB PPDUs of the plurality of stations, the access point transmits a block acknowledgements (BlockAck) to the plurality of stations in response to the received uplink TB PPDUs, that is, transmits the multi-station BlockAck.

After receiving the trigger frame 2, the four station states a new round of OBO random access contention. In the six RUs (the RU1 to the RU6) that can be assigned indicated by the trigger frame 2, the RU1 and the RU2 are randomly accessed by associated station (that is, allowing the station 1, the station 2 and the station 4 to contend for access), the RU3 and the RU4 are randomly accessed by non-associated stations (that is, allowing the station 3 to contend for access), and the RU5 and the RU6 are assigned to specific stations, that is, stations with the AID of 6 and 12. However, there are no station with the AID 6 or 12 in FIG. 3, and thus the RU5 and the RU6 are not contended for in the round of contention. The station 1, the station 2 and the station 4 contend for the RU1 and the RU2, that is, the station 1, the station 2 and the station 4 contend for two RUs. In a case where the OBO counter of the station 1 is equal to the new OBO value minus the number of RUs that can be contended, that is, 4-2=2, the station 1 fails in the round of contention, and the OBO counter is still 2 until a new round of OBO random access contention begins after receiving a next trigger frame, and the OBO value continues to attenuate. In a case where the OBO counter of the station 2 is equal to the current OBO value minus the number of RUs that can be contended, that is, 2-2=0, the station 2 is successful in the round of contention, and randomly selects one RU from the RU1 and the RU2 for data transmission. For example, the station 2 selects the RU2 to transmit an HE TB PPDU and selects a new OBO value within the OCW range for the next OBO random access contention. In a case where the OBO counter of the station 4 is equal to the current OBO value minus the number of RUs that can be contended, that is, 2-2=0, the station 4 is successful in the round of contention, and randomly selects one RU from the RU1 or the RU2 for data transmission. For example, the station 4 selects the RU1 to transmit an HE TB PPDU and selects a new OBO value within the OCW range for the next OBO random access contention. The station 3 contends for the RU3 and the RU4, that is, the station 3 contends for two RUs. In a case where the OBO counter of the station 3 is equal to the current OBO value minus the number of RUs that can be contended, that is, 2-2=0, the station 3 is successful in the round of contention, and randomly selects one RU from the RU3 or the RU4 for data transmission. For example, the station 3 selects the RU4 to transmit an HE TB PPDU and selects a new OBO value within the OCW range for the next OBO random access contention.

### (3) RTS/CTS/CTS-to-self

To join the BSS, the station must have the capability of communicating with the access point, which is a direct and logical approach, but may have a problem that the station communicates with the access point but cannot monitor or be monitored by other stations. For avoiding collision, the station for monitoring sets a network allocation vector (NAV) timer for the transmission (considered as virtual carrier sense) and monitors a radio frequency (RF) channel (considered as physical carrier sense) during monitoring transmissions from other stations. In a case where the station is unable to monitor other stations or is not monitored by other stations, the probability of collision increases. In the RTS/CTS mechanism, the collision is avoided by NAV distribution, and the NAV distribution reserves the medium for the data frame before transmission of the data frame.

The station using the RTS/CTS mechanism must perform RTS/CTS interaction before normal data transmission each time the station prepares to transmit the frame. Before transmission of the data frame, the transmitter first transmits an RTS frame. All stations for monitoring reset the NAV timer based on a duration value of the RTS frame and wait for completion of transmission of the CTS frame, the data frame, and the acknowledge frame. The receiving end then transmits a CTS frame for NAV distribution. All stations for monitoring reset the NAV timer based on the duration of the CTS frame and wait for completion of transmission of the data frame and acknowledgment frame.

Illustratively, the duration value of the RTS frame (in microseconds) represents the time required for completing exchange of the CTS frame, the data frame, and the acknowledge frame and three short interframe spaces (SIFS). The duration value of the CTS frame (in microseconds) represents the time required for completing exchange of the data frame and the acknowledge frame and two SIFS. Even if the station does not monitor the RTS frame, the station should be able to monitor the CTS frame. Regardless of which frame is monitored, the terminal sets the NAV timer based on the provided value. In this case, all stations in the BSS have set the NAV timer and wait for completion of data exchange, and a collision-avoidance protection mechanism is achieved.

In a case where the same BSS includes different technologies, the CTS-to-self is also used to avoid collision. Compared to the RTS/CTS, the advantage of the collision-avoidance protection mechanism using CTS-to-self is that fewer frames are transmitted and the throughput is higher. In a case where the station or the access point of the CTS-to-self prepares to transmit data, the NAV distribution is performed by transmitting the CTS frame (referred to as the CTS-to-self frame) with the recipient address being its own address. The CTS frame notifies all other stations to wait for completion of exchange of the data frame and the acknowledge frame. All stations that monitor the CTS frame sets the NAV timer based on the value provided in the CTS frame.

Simply, in a case where the RTS/CTS interaction or the CTS-to-self frame is a transmitted first frame, a Duration field of the RTS frame, the CTS frame, and the CTS-to-self frame indicate a total duration of the transmission, that is, used for setting the NAV value to protect the channel.

Setting for single and multiple protection under EDCA. The Duration/ID field of the RTS frame, the CTS frame, and the CTS-to-self frame is set as follows:(Single protection settings):

In an RTS frame that is not part of a dual CTS exchange and is not part of a BDT exchange, the Duration/ID field is set to the estimated time, in microseconds, required to transmit the pending frame, plus one CTS frame, plus one Ack or BlockAck frame if required, plus any null data PPDU (NDPs) required, plus explicit feedback if required, plus applicable IFSs.

In all CTS frames sent by STAs as the first frame in the exchange under EDCA and with the receiver address (RA) matching the MAC address of the transmitting STA, the Duration/ID field is set to one of the following:
i) If there is a response frame, the estimated time required to transmit the pending frame, plus one SIFS, plus the response frame (Ack or BlockAck), plus any NDPs required, plus explicit feedback if required, plus an additional SIFS.
ii) If there is no response frame, the time required to transmit the pending frame, plus one SIFS.

The value in the Duration/ID field in a frame transmitted by a QoS STA is defined in 9.2.5.2 (Setting for single and multiple protection under enhanced distributed channel access (EDCA)) to 9.2.5.8 (Setting for other response frames).

At a non-QoS STA, if the CTS frame is the first frame in the exchange and the pending Data or Management frame requires acknowledgment, the Duration field is the time, in microseconds, required to transmit the pending Data or Management frame, plus two SIFSs plus one Ack frame.

At a non-QoS STA, if the CTS frame is the first frame in the exchange and the pending Data or Management frame does not require immediate acknowledgment, the Duration field is the time, in microseconds, required to transmit the pending Data or Management frame, plus one SIFS.

For other CTS frame transmissions by a QoS STA, the Duration field is set as defined in 9.2.5 (Duration/ID field (QoS STA)).

When a node needs to distribute NAV information, for instance, to reserve the medium for a transmission of a nonbasic rate frame (that might not be heard by other nodes in the BSS), the node may first transmit a CTS frame with the RA field equal to its own MAC address (CTS-to-self) if the node is a non-DMG STA, or it may transmit a DMG CTS frame with the RA field equal to its own MAC address and the TA field equal to the MAC address of the peer STA for which the forthcoming transmission of the node is intended (DMG CTS-to self) if the node is a DMG STA. A duration value in the frame protects the pending transmission, plus possibly an Ack frame.

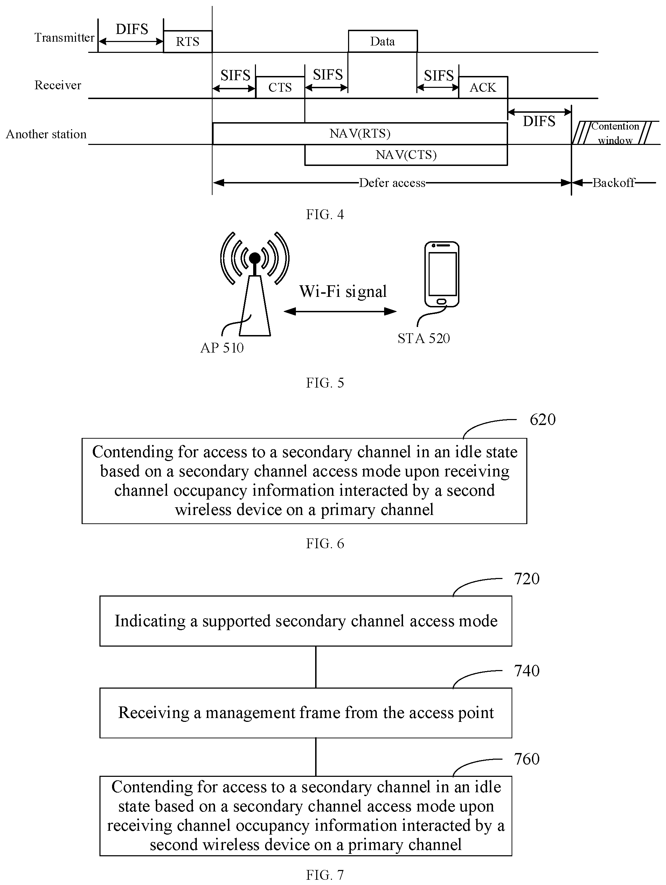

Illustratively, settings of the RTS frame, the CTS frame, the data, the Ack frame, and the NAV are shown in FIG. 4. Before data transmission, the transmitter waits for the channel to change from the busy state to the idle state, and then waits for a DIFS before transmitting an RTS frame to the receiver. The Duration field in the RTS frame indicates a NAV value. After receiving the RTS frame, the receiver agrees the transmitter to transmit the data, waits for an SIFS, and transmits a CTS frame to the transmitter. The Duration field in the CTS frame indicates a NAV value. The transmitter waits for an SIFS before transmitting the data to the receiver. After receiving the data, the receiver waits for an SIFS before transmitting an Ack frame to the transmitter. Other stations monitor the RTS frame from the transmitter and/or the CTS frame from the receiver, defer access based on the NAV value, starts channel contention-based access after monitoring the idle station of the channel within the DIFS time, and starts the backoff process based on the contention window.

### (4) NAV

A non-AP HE STA shall maintain two NAVs, and an HE AP may maintain two NAVs: an intra-BSS NAV and a basic NAV.
- The intra-BSS NAV is updated by an intra-BSS PPDU.
- The basic NAV is updated by an inter-BSS PPDU or a PPDU that cannot be classified as intra-BSS or inter-BSS.

For an HE STA maintaining two NAVs, if both the NAV timers are 0, the virtual CS indication is that the medium is idle; if at least one of the two NAV timers is nonzero, the virtual CS indication is that the medium is busy.

That is to say, after receiving a PPDU, the station updates a corresponding NAV value based on the PPDU for subsequent channel contention-based access.

### (5) Secondary channel using rules in some practices

In some practices, in a case where the primary channel is idle in CCA monitoring, a CCA result with a duration within a priority interframe space (PIFS) is detected on the secondary channel. In a case where the secondary channel is also idle within the PIFS, the secondary channel and the primary channel are used jointly. In a case where the primary channel CCA is busy, the secondary channel cannot be used separately, which wastes transmission opportunities and frequency domain resources of the secondary channel.

### (6) Subchannel Selective Transmission (SST) in some practices

The SST operation refers to selection of an optimal subchannel by a station from 1 MHz, 2 MHz, 4 MHz, 8 MHz, and 16 MHz channels, and communicates with an access points (S1G APs) below 1 GHz on the optimal subchannel to avoid a negative impact of fading channels. The HE SST and SST in some practices have the following differences:
- The SST operation is established between the HE station and the HE access point by negotiating a trigger enabled target wake time (TWT).
- The HE station and the HE access point follow rules of individual TWT agreements within a service period (SP) of the trigger enabled TWT.

Based on the SST operation, although the HE station operations separately on the secondary channel, but are limited by the trigger enabled TWT SPs.

### (7) Secondary channel using solutions in some practices

While the primary is BUSY, the STA performs CCA on other channels in its operating bandwidth and transmits on the channels where CCA completes successfully.

Option 1: A device starts full CCA on other channels after it determines the primary is busy.
- e.g. suitable for devices which cannot perform full CCA in parallel on multiple channels.
- Such sequential CCA can delay gaining access on the idle non-primary channels.

Option 2: A device performs full CCA in parallel on multiple channels in its operating bandwidth, including the primary. If the primary is BUSY, CCA continues on other channels.
- This is suitable for devices that can perform full CCA in parallel on multiple channels.
- Reduces the delay in gaining access to non-primary channels.

For either option, when a device completes full CCA on any non-primary channel while the primary channel is BUSY:

If the set of channels for which full CCA has completed is part of an 802.11 bound channel set, perform PIFS CCA on the remaining channels and transmit on those that are found to be IDLE.

If the set of channels for which full CCA has completed is not part of an 802.11 bound channel set, transmit only on those that complete full CCA together or at about the same time (e.g. using self-defer to align transmissions on the channels).

Transmissions on any non-primary channels should end at the same time as the BUSY of the primary channel. This is possible when PPDU length and/or NAV information is known for the BUSY primary subchannel.

When primary channel BUSY duration information is not available:
- e.g., ED based BUSY, e.g., non-802.11 technology, no NAV, no PHY LENGTH.

Participating STA may:
- Utilize non-Primary channels anyway.
- Transmit short bursts on the non-primary channels while periodically polling the primary channel.

Simply, the solution means that in a case where the station does not support parallel full CCA on the plurality of channels, the full CCA needs to performed on one or more secondary channels in sequence (that is, performing the EDCA process) after the primary channel is BUSY, which results in a defer access duration. In a case where the CCA result indicates one or more idle secondary channels, transmission is performed on the one or more idle secondary channels.

In a case where the station supports parallel full CCA on the plurality of channels, the EDCA process on the secondary channel continues independently (that is, not affected by the primary channel state) after the primary channel is BUSY, which requires the high device capability. In a case where the CCA result indicates one or more idle secondary channels, transmission is performed on the one or more idle secondary channels.

In a case where the idle secondary channel that has performed complete CCA belongs to a predefined bound secondary channel group, whether another secondary channel that has not performed the complete CCA in the secondary channel group is idle within the PIFS time is monitored. In a case where the another secondary channel is idle, transmission is performed on the another secondary channel that has not performed the complete CCA.

In addition, the using time of the secondary channel and the busy time of the primary channel end at the same time. Otherwise, the using of the secondary channel by other stations is affected. For example, in a case where a station occupies the secondary channel for a long time during the busy time of the primary channel, and another station does not know usage of the secondary channel:
- the chance for another station to use a larger bandwidth containing the channel is reduced; and
- the channel access opportunity of other overlapping BSS (OBSS) stations that use the channel as the primary channel is occupied.

Based on above problems, for example, the problem mentioned in (5) secondary channel using rules in some practices, in a case where the device cannot use the secondary channel for transmission when the primary channel is busy, and thus the frequency domain resources of the secondary channel is seriously wasted; the problem mentioned in (6) SST in some practices, although transmission on the secondary channel by the station is supported, but is limited by the trigger enabled TWT SP; the problem mentioned in (7) secondary channel using solutions in some practices, in a case where the primary channel is busy and the secondary channel is idle, the idle secondary channel is used for data transmission, but the access duration to the secondary channel may be delayed or the high device capability is required. In addition, although above content shows the solution to acquire one or more secondary channels for transmission through contention of the plurality of stations, but does not clarify how the plurality of stations contend to acquire different secondary channels for simultaneous transmission and how to divide the plurality of secondary channels. Therefore, it is urgent to determine a method for contention-based access to the secondary channel that can solve above problems.

FIG. 5 is a schematic diagram of a wireless fidelity (Wi-Fi) system according to some embodiments of the present disclosure. The Wi-Fi system includes terminal devices, or a terminal device and a network device, or an AP and a STA, which is not limited in the present disclosure. In the present disclosure, the Wi-Fi system is illustrated as including an AP 510 and an STA 520.

In some scenarios, the AP is also referred to as an AP STA, which means that, in a certain sense, the AP is also a type of STA. In some scenarios, the STA is also referred to as a non-AP STA.

In some embodiments, STAs include an AP STA and a non-AP STA.

The communications within the Wi-Fi system involve communications between an AP and a non-AP STA, communications between non-AP STAs, or communications between an STA and a peer STA. The peer STA refers to a device in peer communication with an STA. For example, the peer STA may be an AP or a non-AP STA.

The AP is a bridge to connect a wired network and a wireless network, and mainly functions to connect various wireless network clients and access the wireless network to the Ethernet. The AP device is a terminal device or a network device equipped with a Wi-Fi chip.

It should be noted that the function of the STA in the communication system is not definite or specific. For example, in some scenarios, the mobile phone serves as the non-AP STA in a case where the mobile phone is connected to the router, and the mobile phone serves as the AP in a case where the mobile phone is the hotspot of other mobile phones.

The AP and the non-AP STA are devices applicable to the Internet of vehicles, Internet of things (IoT) nodes or sensors in the IoT, and smart cameras, smart remote controls, smart water meters and the like in the smart home, sensors in the smart city, and the like.

In some embodiments, the non-AP STA supports, but is not limited to, an 802.11be format. In some embodiments, the non-AP STA also supports various current and future WLAN formats of the 802.11 family, such as an 802.11ax format, an 802.11ac format, an 802.11n format, an 802.11g format, an 802.11b format, an 802.11a format, and the like. The non-AP STA may support network environments of next generation WLAN systems, and the next generation WLAN system is a WLAN system evolved from the 802.11ax system and is backward compatible with the 802.11ax system. Next generation Wi-Fi communication is any new generation Wi-Fi communication succeeding the Wi-Fi 7 based on the IEEE 802.11be specification, for example, ultra-high reliability (UHR) communication. For example, the non-AP STA is a UHR STA.

In some embodiments, the AP is a device supporting the 802.11be format. The AP is also a device supporting various current and future WLAN formats of the 802.11 family, such as an 802.11ax format, an 802.11ac format, an 802.11n format, an 802.11g format, an 802.11b format, an 802.11a format, and the like. The AP may support network environments of next generation WLAN systems, and the next generation WLAN system is a WLAN system evolved from the 802.11ax system and is backward compatible with the 802.11ax system. Next generation Wi-Fi communication is any new generation Wi-Fi communication succeeding the Wi-Fi 7 based on the IEEE 802.11be specification, for example, UHR communication.

In some embodiments of the present disclosure, the STA is a mobile phone, a pad, an e-reader, a laptop, a desktop, a television, a virtual reality (VR) device, an augmented reality (AR) device, a mediated reality (MR) device, an extended reality (XR) device, a baffle reality (BR) device, a cinematic reality (CR) device, a deceive reality (DR) device, an industrial control wireless device, a set-top box, a wireless device in self-driving, an in-vehicle communication device, a wireless device in remote medical surgery, a wireless device in smart grid, a wireless device in transportation safety, a wireless device in a smart city or smart home, a wireless communication chip/application-specific integrated circuit (ASIC)/system on chip (SoC), and the like that support the WLAN/Wi-Fi technologies.

The Wi-Fi system in the embodiments of the present disclosure supports frequency bands including, but not limited to, low frequency bands (2.4 GHz, 5 GHz, and 6 GHz), and high frequency bands (45 GHz and 60 GHz).

One or more links are present between the STA and the AP.

In some embodiments, the STA and the AP support multi-band communications, such as simultaneous communications at 2.4 GHz, 5 GHz, 6 GHz, 45 GHz, and 60 GHz bands, or simultaneous communications in different channels of the same frequency band (or different frequency bands), such that the communication throughput and/or reliability between devices is improved. Such devices are often referred to as multi-band devices, or multi-link devices (MLDs), and are also referred to as multi-link entities or multi-band entities. The multi-link device may be an AP device or an STA device. In a case where the multi-link device is an AP device, one or more APs are included in the multi-link device; and in a case where the multi-link device is an STA device, one or more non-AP STAs are included in the multi-link device.

The multi-link device including one or more APs is also referred to as an AP, and the multi-link device including one or more non-AP STAs is also referred to as a non-AP. In the embodiments of the present disclosure, the non-AP is also referred to as an STA.

In some embodiments, the STA may be present in a form of one or more BSSs, and the BSS is a set of STAs that can be successfully synchronized to communicate with each other. The BSS may include or not include the AP.

In some embodiments, the AP may include a plurality of APs, the non-AP may include a plurality of STAs, a plurality of links may be formed between the APs in the AP and the STAs in the non-AP, and data communication may be achieved between the APs in the AP and the corresponding STAs in the non-AP over the corresponding links.

In some embodiments, the AP is a device deployed in the WLAN/Wi-Fi system to provide a wireless communication function for the STA. The STA may be a user equipment (UE), an access terminal, a subscriber unit, a subscriber station, a rover station, a mobile station, a remote station, a remote terminal, a mobile device, a wireless communication device, a user agent, or a user apparatus. In some embodiments, the STA is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

In some embodiments, both the station and the access point support the Institute of Electrical and Electronic Engineers (IEEE) 802.11 standards, but not limited to the IEEE 802.11 standards.

FIG. 6 is a flowchart of a method for contention-based access to a secondary channel according to some embodiments of the present disclosure. The embodiments are illustrated using an example where the method is applicable to a first wireless device. The method includes at least part of the following process.

**In S620,** access to a secondary channel in an idle state is contended for based on a secondary channel access mode upon receiving channel occupancy information interacted by a second wireless device on a primary channel.

The primary channel and the secondary channel are a group of bound channels. The secondary channel is also referred to as a non-primary channel.

That is, in a case where the first wireless device receives the channel occupancy information of the second wireless device on the primary channel, the first wireless device contends for access to the secondary channel in the idle state based on the secondary channel access mode.

In summary, in the method according to the present disclosure, in a case where the channel occupancy information is interacted on the primary channel, the first wireless device still contends for access to the secondary channel in the idle state to avoid waste of secondary channel resources. In addition, the secondary channel access mode clearly defines how to contend for access to the channel.

FIG. 7 is a flowchart of a method for contention-based access to a secondary channel according to some embodiments of the present disclosure. The embodiments are illustrated using an example where the method is applicable to a first wireless device. The method includes at least part of the following process.

**In S720,** a supported secondary channel access mode is indicated.

The first wireless device indicates the supported secondary channel access mode based on capability information. The capability information is carried in a probe request frame (Probe Request), and/or an association request frame (Association Request), and/or a reassociation request frame (ReAssociation Request).

The first wireless device is the STA 520 shown in FIG. 5.

The secondary channel access mode shown in the present disclosure includes at least one of:
- a first mode, wherein in a case where a channel occupancy duration of the primary channel satisfies a first condition, access to the secondary channel is contended for based on a first channel access scheme; and in a case where the channel occupancy duration of the primary channel satisfies a second condition, access to the secondary channel is contended for based on a second channel access scheme;
- a second mode, wherein access to the secondary channel is contended for based on a first channel access scheme;
- a third mode, wherein access to the secondary channel is contended for based on a second channel access scheme; or
- a fourth mode, wherein access to a group of secondary channels is contended for based on a second channel access scheme, wherein the group of secondary channels includes at least two secondary channels.

In some embodiments, the channel occupancy information includes at least one of a CTS-to-self frame, an RTS frame, or a CTS frame.

In some embodiments, the first condition includes at least one of: the channel occupancy duration of the primary channel being less than a first threshold, or the channel occupancy duration of the primary channel being equal to a first threshold.

In some embodiments, the second condition includes at least one of: the channel occupancy duration of the primary channel being greater than a second threshold, or the channel occupancy duration of the primary channel being equal to a second threshold.

The first threshold is less than or equal to the second threshold.

In some embodiments, the first threshold is predefined or preconfigured, or is indicated by an access point, and the second threshold is predefined or preconfigured, or is indicated by the access point.

In some embodiments, the channel occupancy duration is represented by a NAV.

In some embodiments, the NAV is set based on a Duration field in the channel occupancy information.

In some embodiments, an access duration required for the first channel access scheme is less than an access duration required for the second channel access scheme. That is, a speed for channel access in the first channel access scheme is greater than a speed for channel access in the second channel access scheme.

In some embodiments, a collision-avoidance capability of the second channel access scheme is greater than a collision-avoidance capability of the first channel access scheme. That is, a number of processes of channel detection in the second channel access scheme is greater than a number of processes of channel detection in the first channel access scheme. That is, a probability of channel collision in the second channel access scheme is lower than a probability of channel collision in the first channel access scheme.

In some embodiments, he first channel access scheme includes OBO.

In some embodiments, the second channel access scheme includes at least one of EDCA, a distributed coordination function (DCF), or a hybrid coordination function (HCF).

In some embodiments, the secondary channel accessed in the first mode, the second mode, and the third mode is a single secondary channel.

In some embodiments, a priority of the first mode, a priority of the third mode, a priority of the second mode, and a priority of the fourth mode successively decreases.

In some embodiments, a bandwidth of the secondary channel is a fixed value (BWr), and a number of secondary channels is determined based on at least one of an operating bandwidth (BW) of an access point, a bandwidth (BWp) of the primary channel, or the fixed value (BWr).

In some embodiments, the number of secondary channels is equal to (BW-BWp)/BWr.

In some embodiments, a bandwidth of the secondary channel is a dynamic value (BWi), wherein the dynamic value (BWi) is determined based on at least one of a total operating BW of an access point, a BWp of the primary channel, or a number (Nsta) of first wireless devices.

In some embodiments, the Nsta of first wireless devices is broadcasted by the access point.

In some embodiments, the secondary channel access mode is supported by at least one of the first wireless device or the second wireless device.

In some embodiments, the secondary channel access mode includes at least one of a default secondary channel access mode of an access point, a secondary channel access mode indicated by the access point, or a secondary channel access mode changed by the access point.

**In S740,** a management frame from the access point is received.

In some embodiments, the management frame is used for enabling, and/or disabling, and/or turning off, and/or indicating, and/or changing the secondary channel access mode.

In some embodiments, the management frame indicates and/or changes the first threshold and the second threshold.

**In S760,** access to a secondary channel in an idle state is contended for based on a secondary channel access mode upon receiving channel occupancy information interacted by a second wireless device on a primary channel.

The primary channel and the secondary channel are a group of bound channels.

The second wireless device is the AP 510 or the STA 520 shown in FIG. 5.

That is, in a case where the first wireless device receives the channel occupancy information of the second wireless device on the primary channel, the first wireless device contends for access to the secondary channel in the idle state based on the secondary channel access mode. The second wireless device is a station or an access point.

In a case where the first wireless device successfully contends for access to the secondary channel, a transmission duration of the first wireless device on the secondary channel is less than or equal to a transmission duration of the second wireless device on the primary channel. That is, an end time of the first wireless device on the secondary channel concludes at or before an end time of the second wireless device on the primary channel.

In summary, in the method according to the present disclosure, in a case where the channel occupancy information is interacted on the primary channel, the first wireless device still contends for access to the secondary channel in the idle state to avoid waste of secondary channel resources. In addition, the secondary channel access mode clearly defines how to contend for access to the channel. In different cases or with different needs, access to the secondary channel is contended for based on different secondary channel access modes, such that the flexibility of access to the secondary channel is improved. In addition, the method for organizing secondary channels is provided to support organizing the bandwidths and numbers of secondary channels using different methods in different scenarios, such that the flexibility of access to the secondary channel is further improved.

**The process of contention for access to the secondary channel in the first mode is described.** The process is illustrated using an example where the channel occupancy duration is represented by the NAV, the first channel access mode is the OBO, and the second channel occupancy duration is the EDCA.

The first wireless device receives channel occupancy information interacted by the second wireless device on the primary channel, for example, the CTS-to-self frame, the RTS frame, or the CTS frame. The first wireless device contends for access to the secondary channel based on the first mode. At most one first wireless device can successfully transmit over a secondary channel. The transmission duration of the first wireless device on the secondary channel is less than or equal to the transmission duration of the second wireless device on the primary channel.

In some embodiments, data transmitted by the first wireless device needs an acknowledgment frame from a receiver, and thus the first wireless device determines whether the transmission is successful.

In some embodiments, the data transmitted by the first wireless device does not need the acknowledgment frame from the receiver. Thus, the first wireless device fails to transmit but does not know, that is, the first wireless device always considers that the transmission is successful. The case where the first wireless device considers that the transmission is successful but is actual failed is not the actual transmission success.

The first wireless device is the STA 520 shown in FIG. 5, using an example where the first wireless device is the UHR STA. The second wireless device is the AP 510 or the STA 520 shown in FIG. 5, using an example where the second wireless device is the STA.

In a case where the channel occupancy duration of the primary channel satisfies the first condition, that is, the NAV of the primary channel is less than or equal to the first threshold, the first wireless device contends for access to the secondary channel based on the OBO. The first wireless device prepares to transmitting data upon gaining an access right to a secondary channel based on the OBO, performs the CCA on the secondary channel within the SIFS, and detects whether the secondary channel is in the idle state within the SIFS. In a case where the secondary channel is in the idle state within the SIFS, the first wireless device transmits data after the SIFS. For example, the data is the uplink PPDU. In a case where the secondary channel is in the busy state within the SIFS, the first wireless device does not transmit data. In a case where the first wireless device does not gain an access right to any secondary channel based on the OBO, the first wireless device does not transmit data.

The first threshold is predefined or preconfigured, or is indicated by the access point. For example, the first threshold is indicated by the variable dotl lSCAOBODurationThreshold in management information base (MIB), and a value of the variable is predefined in the communication protocol for the access point and the station. For example, the value of the variable in the access point is predetermined by a network manager, and the access point carries the value (indicated in a SCA OBO Duration Threshold field) of the variable in the management frame (for example, a beacon frame). The station sets a value of the variable dotl lSCAOBODurationThreshold based on the received management frame.

In a case where the channel occupancy duration of the primary channel satisfies the second condition, that is, the NAV of the primary channel is greater than or equal to the second threshold, the first wireless device contends for access to the secondary channel based on the EDCA. The detail process of the EDCA is described above. The first wireless device prepares to transmit data upon gaining an access right to a secondary channel based on the EDCA. For example, the data is the uplink PPDU.

The second threshold is predefined or preconfigured, or is indicated by the access point. For example, the second threshold is indicated by the variable dotl 1SCAOBODurationThreshold in MIB, and a value of the variable is predefined in the communication protocol for the access point and the station. For example, the value of the variable in the access point is predetermined by a network manager, and the access point carries the value (indicated in a SCA OBO Duration Threshold field) of the variable in the management frame (for example, a beacon frame). The station sets a value of the variable dot11SCAOBODurationThreshold based on the received management frame.

In some embodiments, a modulation and coding scheme (MCS) to be used in transmitting a data field in the PPDU is indicated in a preamble of the PPDU transmitted by the first wireless device over the secondary channel. For example, the first wireless device transmits an uplink PPDU over the secondary channel, and the uplink PPDU is in a multi-users (MU) PPDU format.

In some embodiments, the NAV value is set based on the Duration field in the channel occupancy information. For example, the first wireless device receives the CTS-to-self frame interacted (transmitted or received) by the second wireless device on the primary channel, and the first wireless device determines the NAV value of the primary channel based on the value indicated by the Duration field in the CTS-to-self frame. That is, the NAV timer maintained by the first wireless device is updated based on the Duration field in the CTS-to-self frame. For example, the first wireless device receives the RTS frame interacted by the second wireless device on the primary channel, and the first wireless device determines the NAV value of the primary channel based on the value indicated by the Duration field in the RTS frame, that is, the NAV timer maintained by the first wireless device is updated based on the Duration field in the RTS frame. For example, the first wireless device receives the CTS frame interacted by the second wireless device on the primary channel, and the first wireless device determines the NAV value of the primary channel based on the value indicated by the Duration field in the CTS frame, that is, the NAV timer maintained by the first wireless device is updated based on the Duration field in the CTS frame.

In the present disclosure, the method for organizing secondary channels includes at least the following two approaches:
First approach: a bandwidth of the secondary channel is a fixed value; and
Second approach: a bandwidth of the secondary channel is a dynamic value.

In the first approach, the bandwidth of the secondary channel is a fixed value, which is represented by BWr. BWr at least includes one of 20 MHz, 40 MHz, 80 MHz, and 160 MHz. The number of secondary channels is determined based on at least one of an operating BW of an access point, a BWp of the primary channel, or the BWr. The total operating BW of the access point is a total operating BW of the BSS of the first wireless device or the access point.

In some embodiments, the currently occupied channel is the primary channel. That is, the first wireless channel only receives the channel occupancy information interacted on the primary channel, and thus the number of secondary channels is equal to (BW-BWp)/BWr.

In some embodiments, the currently occupied channels include other channels (for example, part of secondary channels) than the primary channel. That is, the first wireless device receives both the channel occupancy information interacted on the primary channel and the channel occupancy information interacted on other channels, and thus the number of secondary channels is equal to (BW-BWp-BWo)/BWr. BWo represents the bandwidth of another channel.

Illustratively, using BWr being 20 MHz as an example, it is assumed that the total operating bandwidth BW of the current access point is 160 MHz, the currently occupied channel is the primary channel, and the bandwidth of the primary channel is 40 MHz, then the number of secondary channels is equal to (160-40)/20=6. Therefore, the number of secondary channels that the first wireless device can contended for upon receiving the channel occupancy information on the primary channel is 6.

In the second approach, the bandwidth of the secondary channel is a dynamic value, which is represented by BWi. BWi at least includes one of 20 MHz, 40 MHz, 80 MHz, and 160 MHz. The bandwidth of the secondary channel is determined based on at least one of the total operating BW of the access point, the BWp of the primary channel, or the Nsta of first wireless devices. The number of secondary channels is determined based on at least one of the operating BW of the access point, the BWp of the primary channel, or the bandwidth of the secondary channel. The total operating BW of the access point is a total operating BW of the BSS of the first wireless device or the access point, and the Nsta of first wireless devices is a number of STAs supporting the current secondary channel access mode in the BSS of the first wireless device or the access point.

In some embodiments, the Nsta of first wireless devices is broadcasted by the access point.

In some embodiments, the Nsta of first wireless devices is broadcasted by the access point through a management frame. For example, the management frame is a beacon frame.

In some embodiments, the currently occupied channel is the primary channel, that is, the first wireless device only receives the channel occupancy information interacted on the primary channel, and the bandwidth of the secondary channel is determined based on (BW-BWp)/Nsta.

In some embodiments, the currently occupied channels include other channels (for example, part of secondary channels) than the primary channel. That is, the first wireless device receives both the channel occupancy information interacted on the primary channel and the channel occupancy information interacted on other channels, and thus the number of secondary channels is determined based on (BW-BWp-BWo)/Nsta. BWo represents the bandwidth of another channel.

For example, using an example where the currently occupied channel is the primary channel, in a case where (BW-BWp)/Nsta ≥ 160, the bandwidth of each secondary channel is 160 MHz, and the number of secondary channels is (BW-BWp)/160 rounded down; in a case where (BW-BWp)/Nsta≥80, the bandwidth of each secondary channel is 80 MHz, and the number of secondary channels is (BW-BWp)/80 rounded down; in a case where (BW-BWp)/Nsta≥40, the bandwidth of each secondary channel is 40 MHz, and the number of secondary channels is (BW-BWp)/40 rounded down; and in a case where (BW-BWp)/Nsta<40, the bandwidth of each secondary channel is 20 MHz, and the number of secondary channels is (BW-BWp)/20 rounded down.

The detailed process of the OBO in the present disclosure are as follows.

A station supporting the first mode maintains an OCW and a secondary channel OBO counter. The OCW may be the same as or different from the OCW for the UORA introduced in related technology (2). The secondary channel OBO counter may be the same as or different from the OBO counter for the UORA introduced in related technology (2). Illustrative description is shown using an example where the OCW is the same as the OCW for the UORA introduced in related technology (2), and the secondary channel OBO counter is different from the OBO counter for the UORA introduced in related technology (2).

Using the station supporting the first mode being the first wireless device as an example, an OCW initial value maintained by the first wireless device is OCWmin. The OCWmin value is predefined or preconfigured, or is indicated by the access point. For example, the OCWmin is broadcasted by the access point over the management frame (for example, the beacon frame).

In some embodiments, the first wireless device determines the OCWmin[AC] value based on the AC of the to-be-transmitted traffic and then sets the OCW[AC]. For example, the OCWmin[AC_BK] for the background (AC_BK) and the OCWmin[AC_BE] for the best effort (AC_BE) are equal to the predefined OCWmin value, the OCWmin[AC_VI] for the voice (AC_VI) is equal to (OCWmin+1)/2-1, and the OCWmin[AC_VO] for the video (AC_VI) is equal to (OCWmin+1)/4-1.

In some embodiments, the access point adjusts the OCWmin based on the total operating bandwidth BW and the number Nsta of first wireless devices. For example, the total operating bandwidth of the access point is 80 MHz, the number Nsta of first wireless devices is 3, and the OCWmin of the access point is set to 5, such that contention collision is avoided and the secondary channel is used as much as possible.

The initial value of the secondary channel OBO counter maintained by the first wireless device is an integer value between 0 and OCW, and the integer value is an integer value randomly selected by the first wireless device and uniformly distributed between 0 and OCW initial value.

The first wireless device receives the CTS-to-self frame, the RTS frame, or the CTS frame interacted by the second wireless device on the primary channel.

In a case where the first wireless device satisfies the following two conditions, the first wireless device gains the access right to the secondary channel. That is, the first wireless device successfully accesses the secondary channel. Condition 1: the first wireless device has to-be-transmitted data, for example, to-be-cached data, when receiving the CTS-to-self frame, the RTS frame, or the CTS frame. Condition 2: in a case where the first device calculates that there is at least one (for example, 3) available secondary channel according to the first or second method for organizing secondary channels, or in a case where the number of secondary channels in the idle state is greater than or equal to 1, the secondary channel OBO counter value (for example, 2) of the first wireless device is less than or equal to the calculated number of available secondary channels. The first wireless device sets the OBO counter value of the maintained secondary channel to 0 and randomly selects a secondary channel from the calculated available secondary channels. After the first wireless device contends for access to a secondary channel, the OBO counter value for the maintained secondary channel is set to an integer value between 0 and OCW, and the integer value is randomly selected by the first wireless device between 0 and the initial OCW value.

In a case where the first device calculates that there is at least one (for example, 3) available secondary channel according to the first or second method for organizing secondary channels, or in a case where the number of secondary channels in the idle state is greater than or equal to 1, the secondary channel OBO counter value (for example, 5) of the first wireless device is greater than the calculated number of available secondary channels, the first wireless device subtracts the calculated number of available secondary channels (for example, 5-3=2) from the OBO counter value of the maintained secondary channel and keeps the value unchanged until the next OBO contention starts.

In a case where the first wireless device gaining the access right to the secondary channel fails to transmit, for example, a plurality of first wireless devices contend for the same secondary channel simultaneously, that is, the plurality of first wireless devices randomly select the same secondary channel and transmit data, and thus the first wireless device fails to transmit, the first wireless device failing to transmit updates the maintained OCW to 2×OCW+1, and a value of 2 ×OCW+1 is less than or equal to the OCWmax. The OCWmax value is predefined or preconfigured, or is indicated by the access point. For example, the OCWmax is broadcasted by the access point over the management frame (for example, the beacon frame). In a case where the OCW maintained by the first wireless device reaches the OCWmax, the OCW needs to be maintained at the OCWmax until the first wireless device gains the access right to the secondary channel and successfully transmits data, and then the maintained OCW is updated to the OCWmin. The OCWmin value is predefined or preconfigured, or is indicated by the access point. For example, the OCWmin is broadcasted by the access point over the management frame (for example, the beacon frame). The OCWmin in this update may be the same or different from the OCWmin in the previous update.

In some embodiments, data transmitted by the first wireless device needs or does not need the acknowledgment frame.

In some embodiments, in a case where the first wireless device does not receive an acknowledgement frame (the ACK frame or the BlockAck frame) from the access point within a target duration upon transmitting data over the secondary channel to which the first wireless device gains the access right, the first wireless device considers that the transmission is failed. The target duration is predefined or preconfigured, or is indicated by the access point, or autonomously determined by the first wireless device.

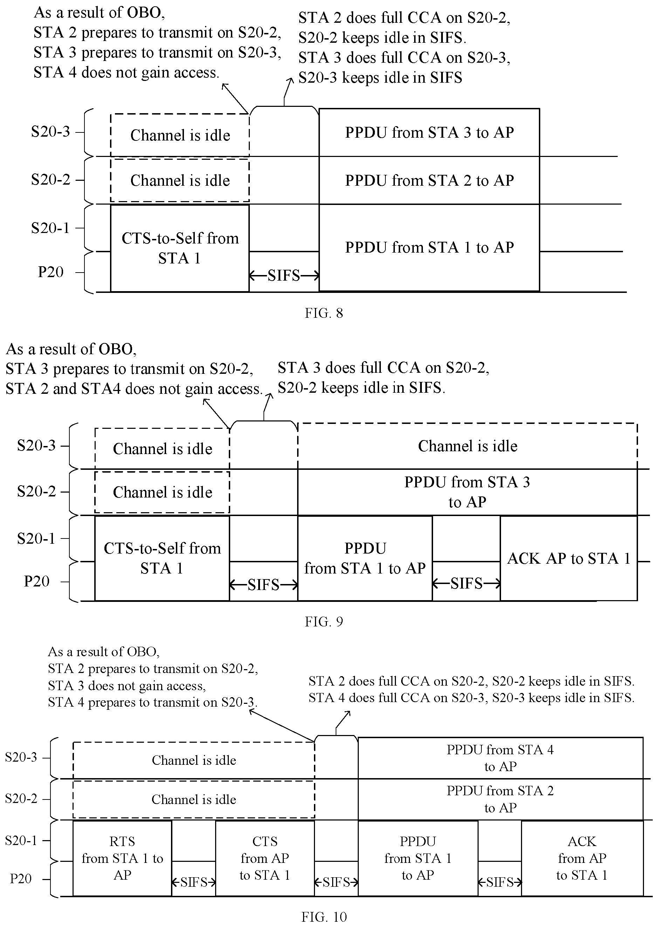

FIG. 8 is a schematic diagram of contention for access to a secondary channel based on OBO according to some embodiments of the present disclosure. In FIG. 8, the total operating bandwidth BW of the access point is 80 MHz, the channel occupancy information transmitted by the STA 1 (equivalent to the second wireless device, for example, a traditional station) on the primary 40 MHz channel is the CTS-to-self frame, and the primary 40 MHz channel includes a 20 MHz primary channel P20 and a 20 MHz secondary channel S20-1. After another SIFS, the STA 1 transmits a PPDU to the access point, and the PPDU carries the frame that does not need to be acknowledged. That is, the receiver of the PPDU does not need to provide the acknowledgement frame (for example, the Ack frame, the BlockAck frame) for the PPDU. The STA 2, the STA 3, and the STA 4 (all equivalent to the first wireless device, for example, the UHR STA) receive the channel occupancy information interacted on the primary 40 MHz channel and start the OBO contention-based access. The STA 2, the STA 3, and the STA 4 calculate that the bandwidth of the secondary channel is a dynamic value of 20 MHz or a fixed value of 20 MHz, and calculate that the number of available secondary channels is 2 based on (80-20-20)/20=2. That is, access to two secondary channels is contended for.

It is assumed that the STA 1 does not have the OBO counter of the maintained secondary channel, the current values of the OBO counters of the maintained secondary channels by the STA 2, the STA 3, and the STA 4 are 2, 1, and 5 respectively. As shown in Table 1.

For the STA 2, in a case where the OBO value of the current secondary channel is equal to the number of available secondary channels, the STA 2 sets the secondary channel OBO counter to 0 and randomly selects a secondary channel from the two available channels. It is assumed that the secondary channel randomly selected by the STA 2 is the S20-2, the STA 2 gains the access right to the S20-2, that is, the STA 2 successfully accesses the S20-2 through the OBO. After the STA 2 gains the access right to the secondary channel, the STA 2 sets the secondary channel OBO counter to an integer value between 0 and the OCW value. The integer value is randomly selected by the STA 2, for example, 4, and the STA 2 sets the secondary channel OBO counter to 4 and keeps unchanged until the next OBO contention for access starts.

For the STA 3, in a case where the OBO value of the current secondary channel is less than the number of available secondary channels, the STA 3 sets the secondary channel OBO counter to 0 and randomly selects a secondary channel from the two available channels. It is assumed that the secondary channel randomly selected by the STA 3 is the S20-3, the STA 3 gains the access right to the S20-3, that is, the STA 3 successfully accesses the S20-3 through the OBO. After the STA 3 gains the access right to the secondary channel, the STA 3 sets the secondary channel OBO counter to an integer value between 0 and the OCW value. The integer value is randomly selected by the STA 3, for example, 2, and the STA 3 sets the secondary channel OBO counter to 2 and keeps unchanged until the next OBO contention for access starts.

For the STA 4, in a case where the OBO value of the current secondary channel is greater than the number of available secondary channels, the STA 4 sets the secondary channel OBO counter to 5-2=3 (the OBO value of the current secondary channel minus the number of available secondary channels). That is, the STA 4 does not gain the access right for the secondary channel, that is, the STA 4 fails to access the secondary channel through the OBO. The STA 4 sets the secondary channel OBO counter to 3 and keeps unchanged until the next OBO contention for access starts.

**Table 1 Cases of OBO contention-based access of stations**

| | STA 1 | STA 2 | STA 3 | STA 4 |
|---|---|---|---|---|
| | Without secondary channel OBO | OBO value of the current secondary channel being 2 | OBO value of the current secondary channel being 1 | OBO value of the current secondary channel being 5 |
| P20 | Use | - | - | - |
| S20-1 | | - | - | - |
| S20-2 | - | OBO≤2, randomly selects a secondary channel S20-2 | OBO≤2, randomly selects a secondary channel S20-3 | OBO - 2=3 |
| S20-3 | - | | | |
| | | Secondary channel OBO being set as a new value randomly selected between 0 and the OCW (for example, 4) | Secondary channel OBO being set as a new value randomly selected between 0 and the OCW (for example, 2) | Keeps the OBO value of the secondary channel as 3 |

Referring to FIG. 8, upon receiving the channel occupancy information interacted on the primary 40 MHz channel, the STA 2 and the STA 3 successfully access to the secondary channel through the OBO, and respectively perform the CCA on the secondary channels to which the STA 2 and the STA 3 gain the access right within the SIFS time. That is, the STA 2 performs the CCA on the S20-2 within the SIFS time, and the STA 3 performs the CCA on the S20-3 within the SIFS time. In a case where the CCA result indicates that the secondary channel keeps the idle state within the SIFS time, data is transmitted based on the channel occupancy duration indicated by the channel occupancy information. That is, the STA 2 and the STA 3 transmit data based on the NAV value indicated by the Duration field in the CTS-to-self frame. The transmission duration of the STA 2 on the S20-2 is less than or equal to the duration occupied by the STA 1 on the primary 40 MHz channel (including the P20 and the S20-1) through the CTS-to-self frame this time. The transmission duration of the STA 3 on the S20-3 is less than or equal to the duration occupied by the STA 1 on the primary 40 MHz channel (including the P20 and the S20-1) through the CTS-to-self frame this time.

FIG. 9 is a schematic diagram of contention for access to a secondary channel based on OBO according to some embodiments of the present disclosure. In FIG. 9, the total operating bandwidth BW of the access point is 80 MHz, the channel occupancy information transmitted by the STA 1 (equivalent to the second wireless device, for example, a traditional station) on the primary 40 MHz channel is the CTS-to-self frame, and the primary 40 MHz channel includes a 20 MHz primary channel P20 and a 20 MHz secondary channel S20-1. After another SIFS, the STA 1 transmits a PPDU to the access point, and the PPDU carries the frame that needs to be acknowledged. That is, the receiver of the PPDU needs to provide the acknowledgement frame (for example, the Ack frame, the BlockAck frame) for the PPDU. The STA 2, the STA 3, and the STA 4 (all equivalent to the first wireless device, for example, the UHR STA) receive the channel occupancy information interacted on the primary 40 MHz channel and start the OBO contention-based access. The STA 2, the STA 3, and the STA 4 calculate that the bandwidth of the secondary channel is a dynamic value of 20 MHz or a fixed value of 20 MHz, and calculate that the number of available secondary channels is 2 based on (80-20-20)/20=2. That is, access to two secondary channels is contended for.

It is assumed that the STA 1 does not have the OBO counter of the maintained secondary channel, the current values of the OBO counters of the maintained secondary channels by the STA 2, the STA 3, and the STA 4 are 4, 2, and 3 respectively. As shown in Table 2.

For the STA 2, in a case where the OBO value of the current secondary channel is greater than the number of available secondary channels, the STA 2 sets the secondary channel OBO counter to 4-2=2 (the OBO value of the current secondary channel minus the number of available secondary channels). That is, the STA 2 does not gain the access right for the secondary channel, that is, the STA 2 fails to access the secondary channel through the OBO. The STA 2 sets the secondary channel OBO counter to 2 and keeps unchanged until the next OBO contention for access starts.

For the STA 3, in a case where the OBO value of the current secondary channel is equal to the number of available secondary channels, the STA 3 sets the secondary channel OBO counter to 0 and randomly selects a secondary channel from the two available channels. It is assumed that the secondary channel randomly selected by the STA 3 is the S20-2, the STA 3 gains the access right to the S20-2, that is, the STA 3 successfully accesses the S20-2 through the OBO. After the STA 3 gains the access right to the secondary channel, the STA 3 sets the secondary channel OBO counter to an integer value between 0 and the OCW value. The integer value is randomly selected by the STA 3, for example, 3, and the STA 3 sets the secondary channel OBO counter to 3 and keeps unchanged until the next OBO contention for access starts.

For the STA 4, in a case where the OBO value of the current secondary channel is greater than the number of available secondary channels, the STA 4 sets the secondary channel OBO counter to 3-2=1 (the OBO value of the current secondary channel minus the number of available secondary channels). That is, the STA 4 does not gain the access right to the secondary channel, that is, the STA 4 fails to access the secondary channel through the OBO. The STA 4 sets the secondary channel OBO counter to 1 and keeps unchanged until the next OBO contention for access starts.

**Table 2 Cases of OBO contention-based access of stations**

| | STA 1 | STA 2 | STA 3 | STA 4 |
|---|---|---|---|---|
| | Without secondary channel OBO | OBO value of the current secondary channel being 4 | OBO value of the current secondary channel being 2 | OBO value of the current secondary channel being 3 |
| P20 | Use | - | - | - |
| S20-1 | | - | - | - |
| S20-2 | - | OBO-2=2 | OBO≤2, randomly selects a secondary channel S20-2 | OBO-2=1 |
| S20-3 | - | | | |
| | | Keeps the OBO value of the secondary channel as 2 | Secondary channel OBO being set as a new value randomly selected between 0 and the OCW (for example, 3) | Keeps the OBO value of the secondary channel as 1 |

Referring to FIG. 9, upon receiving the channel occupancy information interacted on the primary 40 MHz channel, the STA 3 successfully accesses to the secondary channel through the OBO, and performs the CCA on the secondary channel to which the STA 3 gains the access right within the SIFS time. That is, the STA 3 performs the CCA on the S20-2 within the SIFS time. In a case where the CCA result indicates that the secondary channel keeps the idle state within the SIFS time, data is transmitted based on the channel occupancy duration indicated by the channel occupancy information. That is, the STA 3 transmits data based on the NAV value indicated by the Duration field in the CTS-to-self frame. As the PPDU transmitted by the STA 1 to the access point needs to the acknowledge frame, the NAV value set by the STA 3 based on the CTS-to-self frame includes the transmission duration of the PPDU, the SIFS, and a duration of the acknowledge frame. The transmission duration of the STA 3 on the S20-2 is less than or equal to the duration (that is, the transmission duration of the PPDU + the SIFS + and the transmission duration of the ACK frame) occupied by the STA 1 on the primary 40 MHz channel (including the P20 and the S20-1) through the CTS-to-self frame this time.

In some embodiments, a transmit bandwidth of the CTS frame is less than or equal to a transmit bandwidth of the RTS frame.

In some embodiments, a transmit channel of the CTS frame is the same as a transmit channel of the RTS frame.

In some embodiments, the CTS frame instructs the receiver of the CTS frame to transmit data. The receiver of the CTS frame is the transmitter of the RTS frame. The CTS frame is applicable to the first channel access scheme and the second channel access scheme.

FIG. 10 is a schematic diagram of contention for access to a secondary channel based on OBO according to some embodiments of the present disclosure. In FIG. 10, the total operating bandwidth BW of the access point is 80 MHz, the STA 1 (equivalent to the second wireless device, for example, a traditional station) transmits an RTS frame on the primary 40 MHz channel, the access point transmits a CTS frame to the STA 1 on the primary 40 MHz channel, and the channel occupancy information interacted by the STA 1 is the RTS frame/CTS frame. The primary 40 MHz channel includes a 20 MHz primary channel P20 and a 20 MHz secondary channel S20-1. After the STA 1 receives the CTS frame and waits for a SIFS, the STA 1 transmits a PPDU to the access point, and the PPDU carries the frame that needs to be acknowledged. That is, the receiver of the PPDU needs to provide the acknowledgement frame (for example, the Ack frame, the BlockAck frame) for the PPDU. The STA 2, the STA 3, and the STA 4 (all equivalent to the first wireless device, for example, the UHR STA) receive the channel occupancy information interacted on the primary 40 MHz channel and start the OBO contention-based access. The STA 2, the STA 3, and the STA 4 calculate that the bandwidth of the secondary channel is a dynamic value of 20 MHz or a fixed value of 20 MHz, and calculate that the number of available secondary channels is 2 based on (80-20-20)/20=2. That is, access to two secondary channels is contended for.

It is assumed that the STA 1 does not have the OBO counter of the maintained secondary channel, the current values of the OBO counters of the maintained secondary channels by the STA 2, the STA 3, and the STA 4 are 2, 3, and 1 respectively. As shown in Table 3.

For the STA 2, in a case where the OBO value of the current secondary channel is equal to the number of available secondary channels, the STA 2 sets the secondary channel OBO counter to 0 and randomly selects a secondary channel from the two available channels. It is assumed that the secondary channel randomly selected by the STA 2 is the S20-2, the STA 2 gains the access right to the S20-2, that is, the STA 2 successfully accesses the S20-2 through the OBO. After the STA 2 gains the access right to the secondary channel, the STA 2 sets the secondary channel OBO counter to an integer value between 0 and the OCW value. The integer value is randomly selected by the STA 2, for example, 3, and the STA 2 sets the secondary channel OBO counter to 3 and keeps unchanged until the next OBO contention for access starts.

For the STA 3, in a case where the OBO value of the current secondary channel is greater than the number of available secondary channels, the STA 2 sets the secondary channel OBO counter to 3-2=1 (the OBO value of the current secondary channel minus the number of available secondary channels). That is, the STA 3 does not gain the access right to the secondary channel, that is, the STA 3 fails to access the secondary channel through the OBO. The STA 3 sets the secondary channel OBO counter to 1 and keeps unchanged until the next OBO contention for access starts.

For the STA 4, in a case where the OBO value of the current secondary channel is less than the number of available secondary channels, the STA 4 sets the secondary channel OBO counter to 0 and randomly selects a secondary channel from the two available channels. It is assumed that the secondary channel randomly selected by the STA 4 is the S20-3, the STA 4 gains the access right to the S20-3, that is, the STA 4 successfully accesses the S20-3 through the OBO. After the STA 4 gains the access right to the secondary channel, the STA 4 sets the secondary channel OBO counter to an integer value between 0 and the OCW value. The integer value is randomly selected by the STA 4, for example, 4, and the STA 4 sets the secondary channel OBO counter to 4 and keeps unchanged until the next OBO contention for access starts.

**Table 3 Cases of OBO contention-based access of station**

| | STA 1 | STA 2 | STA 3 | STA 4 |
|---|---|---|---|---|
| | Without secondary channel OBO | OBO value of the current secondary channel being 2 | OBO value of the current secondary channel being 3 | OBO value of the current secondary channel being 1 |
| P20 | Use | - | - | - |
| S20-1 | | - | - | - |
| S20-2 | - | OBO≤2, randomly selects a secondary channel S20-2 | OBO-2=1 | OBO≤2, randomly selects a secondary channel S20-3 |
| S20-3 | - | | | |
| | | Secondary channel OBO being set as a new value randomly selected between 0 and the OCW (for example, 3) | Keeps the OBO value of the secondary channel as 1 | Secondary channel OBO being set as a new value randomly selected between 0 and the OCW (for example, 4) |

Referring to FIG. 10, upon receiving the channel occupancy information interacted on the primary 40 MHz channel, the STA 2 and the STA 4 successfully access to the secondary channel through the OBO, and respectively perform the CCA on the secondary channels to which the STA 2 and the STA 4 gain the access right within the SIFS time. That is, the STA 2 performs the CCA on the S20-2 within the SIFS time, and the STA 4 performs the CCA on the S20-3 within the SIFS time. In a case where the CCA result indicates that the secondary channel keeps the idle state within the SIFS time, data is transmitted based on the channel occupancy duration indicated by the channel occupancy information. That is, the STA 2 and the STA 4 transmit data based on the NAV value indicated by the Duration field in the CTS-to-self frame. As the PPDU transmitted by the STA 1 to the access point needs to the acknowledge frame, the NAV value set by the STA 2 and the STA 4 based on the CTS-to-self frame includes the transmission duration of the PPDU, the SIFS, and the duration of the acknowledge frame. The transmission duration of the STA 2 on the S20-2 is less than or equal to the duration (that is, the transmission duration of the PPDU + the SIFS + and the transmission duration of the ACK frame) occupied by the STA 1 on the primary 40 MHz channel (including the P20 and the S20-1) through the CTS-to-self frame this time. The transmission duration of the STA 4 on the S20-3 is less than or equal to the duration (that is, the transmission duration of the PPDU + the SIFS + and the transmission duration of the ACK frame) occupied by the STA 1 on the primary 40 MHz channel (including the P20 and the S20-1) through the CTS-to-self frame this time.

In some embodiments, the transmit bandwidth of the CTS frame is greater than the transmit bandwidth of the RTS frame.

In some embodiments, the transmit channel of the CTS frame is the different from the transmit channel of the RTS frame.

In some embodiments, the CTS frame instructs the receiver of the CTS frame to transmit data, and further instructs to reserve information for access to the secondary channel. The receiver of the CTS frame is the transmitter of the RTS frame. The reserved information for the secondary channel includes at least one of channel information or transmission duration. Reserving information for access to the secondary channel means reserving information for access to a subsequently possible secondary channel, and a wireless device that may be access the secondary channel is not limited. The CTS frame is applicable to the first channel access scheme and the second channel access scheme.

In some embodiments, in a case where the first wireless device receives the RTS frame and the CTS frame that instructs the receiver of the CTS frame to transmit data and further instructs to reserve information for access to the secondary channel, the first wireless device does not perform the CCA on the successfully accessed secondary channel, that is, the first wireless device does not perform the CCA on the successfully accessed secondary channel within the SIFS time after receiving the CTS frame.

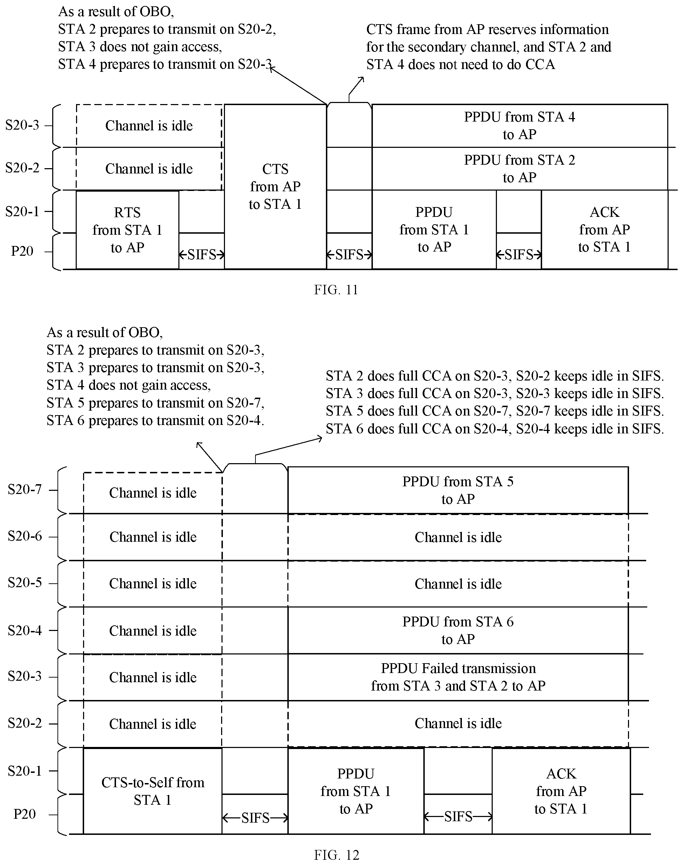

FIG. 11 is a schematic diagram of contention for access to a secondary channel based on OBO according to some embodiments of the present disclosure. In FIG. 11, the total operating bandwidth BW of the access point is 80 MHz, the STA 1 (equivalent to the second wireless device, for example, a traditional station) transmits an RTS frame on the primary 40 MHz channel, and the primary 40 MHz channel includes a 20 MHz primary channel P20 and a 20 MHz secondary channel S20-1. After the access point receives the RTS frame, the access point transmits a CTS frame to the STA 1 on all idle channels (for example, a total 80 MHz channel corresponding to the P20, the P20-1, S20-2, and S20-3) within the total operating bandwidth. The CTS frame transmitted on the primary 40 MHz channel instructs the STA 1 to transmit data, the CTS frame transmitted on the secondary 40 MHz channel (the S20-2 and the S20-3) instructs to reserve information for access to the secondary channel (that is, the secondary channel access), and channel occupancy information interacted by the STA 1 is the RTS frame/CTS frame. The reserved information for access to the secondary channel is the channel information and the transmission duration. After the STA 1 receives the CTS frame and waits for an SIFS, the STA 1 transmits a PPDU to the access point on the primary 40 MHz channel, and the PPDU carries the frame that needs to be acknowledged. That is, the receiver of the PPDU needs to provide the acknowledgement frame (for example, the Ack frame, the BlockAck frame) for the PPDU. The STA 2, the STA 3, and the STA 4 (all equivalent to the first wireless device, for example, the UHR STA) receive the channel occupancy information interacted on the primary 40 MHz channel and the reserved information for access to the secondary channel indicated by the AP, and start the OBO contention-based access.

As the CTS frame transmitted on the secondary 40 MHz channel (the S20-2 and the S20-3) reserves the channel and transmission duration for access to the secondary channel, the STA 2 and the STA 4 do not need to perform the CCA upon successfully accessing to the secondary channel based on the OBO. That is, the STA 2 does not need to perform the CCA on the S20-2 within the SIFS time, and the STA 4 does not need to perform the CCA on the S20-3 within the SIFS time. For other processes or content, reference may be made to the embodiments shown in FIG. 10, which is not repeated herein.

FIG. 12 is a schematic diagram of contention for access to a secondary channel based on OBO according to some embodiments of the present disclosure. In FIG. 12, the total operating bandwidth BW of the access point is 160 MHz, the channel occupancy information transmitted by the STA 1 (equivalent to the second wireless device, for example, a traditional station) on the primary 40 MHz channel is the CTS-to-self frame, and the primary 40 MHz channel includes a 20 MHz primary channel P20 and a 20 MHz secondary channel S20-1. After another SIFS, the STA 1 transmits a PPDU to the access point, and the PPDU carries the frame that needs to be acknowledged. That is, the receiver of the PPDU needs to provide the acknowledgement frame (for example, the Ack frame, the BlockAck frame) for the PPDU. The STA 2, the STA 3, the STA 4, the STA 5, and the STA 6 (all equivalent to the first wireless device, for example, the UHR STA) receive the channel occupancy information interacted on the primary 40 MHz channel and start the OBO contention-based access. The STA 2, the STA 3, the STA 4, the STA 5, and the STA 6 calculate that the bandwidth of the secondary channel is a dynamic value of 20 MHz or a fixed value of 20 MHz, and calculate that the number of available secondary channels is 6 based on (160-20-20)/20=6. That is, access to six secondary channels is contended for.

It is assumed that the STA 1 does not have the OBO counter of the maintained secondary channel, the current values of the OBO counters of the maintained secondary channels by the STA 2, the STA 3, the STA 4, the STA 5, and the STA 6 are 3, 1, 7, 4, and 6 respectively. Then through the contention process same as the above contention for access to the secondary channel based on OBO, as shown in FIG. 4, the STA 2, the STA 3, the STA 5, and the STA 6 gain the access right to the secondary channel.

**Table 4 Cases of OBO contention-based access of stations**

| | STA 1 | STA 2 | STA 3 | STA 4 | STA 5 | STA 6 |
|---|---|---|---|---|---|---|
| | Without secondary channel OBO | OBO value of the current secondary channel being 2 | OBO value of the current secondary channel being 3 | OBO value of the current secondary channel being 1 | OBO value of the current secondary channel being 1 | OBO value of the current secondary channel being 1 |
| P20 | Use | - | - | - | - | - |
| S20-1 | | - | - | - | - | - |
| S20-2 | - | OBO≤6, randomly selects a secondary channel S20-3 | OBO≤6, randomly selects a secondary channel S20-3 | OBO - 6=1 | OBO≤6, randomly selects a secondary channel S20-7 | OBO≤6, randomly selects a secondary channel S20-4 |
| S20-3 | - | | | | | |
| S20-4 | - | | | | | |
| S20-5 | - | | | | | |
| S20-6 | - | | | | | |
| S20-7 | - | | | | | |
| | | Failure of transmission, secondary channel OBO being set as a new value randomly selected between 0 and (2×OCW+1) (for example, 9) | Failure of transmission, secondary channel OBO being set as a new value randomly selected between 0 and (2×OCW+1) (for example, 12) | Keeps the OBO value of the secondary channel as 1 | Secondary channel OBO being set as a new value randomly selected between 0 and the OCW (for example, 3) | Secondary channel OBO being set as a new value randomly selected between 0 and the OCW (for example, 4) |

Referring to FIG. 12, upon receiving the channel occupancy information interacted on the primary 40 MHz channel, the STA 2, the STA 3, the STA 5, and the STA 6 successfully access to the secondary channel based on the OBO, and respectively perform the CCA on the secondary channels to which the STA 2, the STA 3, the STA 5, and the STA 6 gain the access right within the SIFS time. That is, the STA 2 performs the CCA on the S20-3 within the SIFS time, the STA 3 performs the CCA on the S20-3 within the SIFS time, the STA 5 performs the CCA on the S20-7 within the SIFS time, and the STA 6 performs the CCA on the S20-4 within the SIFS time. In a case where the CCA result indicates that the secondary channel keeps the idle state within the SIFS time, data is transmitted based on the channel occupancy duration indicated by the channel occupancy information. That is, the STA 2, the STA 3, the STA 5, and the STA 6 transmit data based on the NAV value indicated by the Duration field in the CTS-to-self frame. The transmission durations of the STA 2, the STA 3, the STA 5, and the STA 6 on the secondary channels to which the STA 2, the STA 3, the STA 5, and the STA 6 gain the access right are less than or equal to the duration (that is, the transmission duration of the PPDU + the SIFS + and the transmission duration of the ACK frame) occupied by the STA 1 on the primary 40 MHz channel (including the P20 and the S20-1) through the CTS-to-self frame this time.

Assuming that the data transmitted by the STA 2 and the STA 3 on the secondary channel to which the STA 2 and the STA 3 gain the access right needs the acknowledge frame, the STA 2 and the STA 3 both gain the access right to the S20-3 channel, and thus simultaneous transmission of data by the STA 2 and the STA 3 on the S20-3 causes failure of transmission for both the STA 2 and the STA 3. In a case where the STA 2 and the STA 3 fail to transmit, the STA 2 and the STA 3 update the maintained OCW to 2×OCW+1, and the value of 2×OCW+1 is less than or equal to the OCWmax. The OCWmax value is predefined or preconfigured, or is indicated by the access point. For example, the OCWmax is broadcasted by the access point over the management frame (for example, the beacon frame). In a case where the OCW maintained by the STA 2 and the STA 3 reaches the OCWmax, the OCW needs to be maintained at the OCWmax until the STA 2 and the STA 3 gain the access right to the secondary channel and successfully transmit data, and then the maintained OCW is updated to the OCWmin. The OCWmin value is predefined or preconfigured, or is indicated by the access point. For example, the OCWmin is broadcasted by the access point over the management frame (for example, the beacon frame).

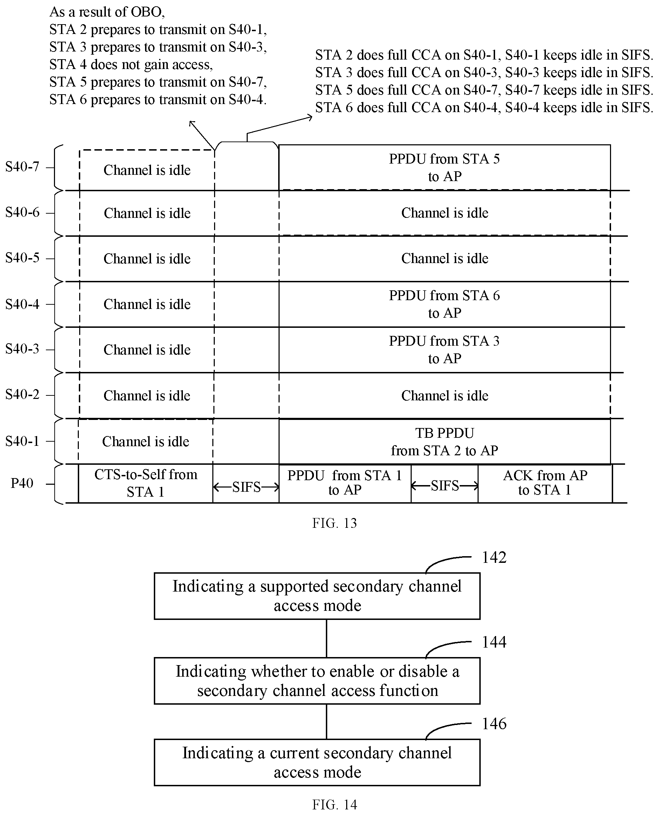

FIG. 13 is a schematic diagram of contention for access to a secondary channel based on OBO according to some embodiments of the present disclosure. In FIG. 13, the total operating bandwidth BW of the access point is 320 MHz, the channel occupancy information transmitted by the STA 1 (equivalent to the second wireless device, for example, a traditional station) on the primary 40 MHz channel is the CTS-to-self frame, and the primary 40 MHz channel includes a 40 MHz primary channel P40. After another SIFS, the STA 1 transmits a PPDU to the access point, and the PPDU carries the frame that needs to be acknowledged. That is, the receiver of the PPDU needs to provide the acknowledgement frame (for example, the Ack frame, the BlockAck frame) for the PPDU. The STA 2, the STA 3, the STA 4, the STA 5, and the STA 6 (all equivalent to the first wireless device, for example, the UHR STA) receive the channel occupancy information interacted on the primary 40 MHz channel and start the OBO contention-based access. The STA 2, the STA 3, the STA 4, the STA 5, and the STA 6 calculate that the bandwidth of the secondary channel is a dynamic value of 40 MHz or a fixed value of 40 MHz, and calculate that the number of available secondary channels is 7 based on (320-40)/40=7. That is, access to seven secondary channels is contended for.

It is assumed that the STA 1 does not have the OBO counter of the maintained secondary channel, the current values of the OBO counters of the maintained secondary channels by the STA 2, the STA 3, the STA 4, the STA 5, and the STA 6 are 5, 4, 9, 6, and 3 respectively. Then through the contention process same as the above contention for access to the secondary channel based on OBO, as shown in FIG. 5, the STA 2, the STA 3, the STA 5, and the STA 6 gain the access right to the secondary channel.

**Table 5 Cases of OBO contention-based access of stations**

| | STA 1 | STA 2 | STA 3 | STA 4 | STA 5 | STA 6 |
|---|---|---|---|---|---|---|
| | Without secondary channel OBO | OBO value of the current secondary channel being 5 | OBO value of the current secondary channel being 4 | OBO value of the current secondary channel being 9 | OBO value of the current secondary channel being 6 | OBO value of the current secondary channel being 3 |
| P20 | Use | - | - | - | - | - |
| S20-1 | | - | - | - | - | - |
| S20-2 | - | OBO≤7, randomly selects a secondary channel S40-1 | OBO≤7, randomly selects a secondary channel S40-3 | OBO - 7=2 | OBO≤7, randomly selects a secondary channel S40-7 | OBO≤7, randomly selects a secondary channel S40-4 |
| S20-3 | - | | | | | |
| S20-4 | - | | | | | |
| S20-5 | - | | | | | |
| S20-6 | - | | | | | |
| S20-7 | - | | | | | |
| | | Secondary channel OBO being set as a new value randomly selected between 0 and the OCW (for example, 9) | Secondary channel OBO being set as a new value randomly selected between 0 and the OCW (for example, 7) | Keeps the OBO value of the secondary channel 2 | Secondary channel OBO being set as a new value randomly selected between 0 and the OCW (for example, 3) | Secondary channel OBO being set as a new value randomly selected between 0 and the OCW (for example, 5) |

Referring to FIG. 13, upon receiving the channel occupancy information interacted on the primary 40 MHz channel, the STA 2, the STA 3, the STA 5, and the STA 6 successfully access to the secondary channel based on the OBO, and respectively perform the CCA on the secondary channels to which the STA 2, the STA 3, the STA 5, and the STA 6 gain the access right within the SIFS time. That is, the STA 2 performs the CCA on the S40-1 within the SIFS time, the STA 3 performs the CCA on the S40-3 within the SIFS time, the STA 5 performs the CCA on the S40-7 within the SIFS time, and the STA 6 performs the CCA on the S40-4 within the SIFS time. In a case where the CCA result indicates that the secondary channel keeps the idle state within the SIFS time, data is transmitted based on the channel occupancy duration indicated by the channel occupancy information. That is, the STA 2, the STA 3, the STA 5, and the STA 6 transmit data based on the NAV value indicated by the Duration field in the CTS-to-self frame. The transmission durations of the STA 2, the STA 3, the STA 5, and the STA 6 on the secondary channels to which the STA 2, the STA 3, the STA 5, and the STA 6 gain the access right are less than or equal to the duration (that is, the transmission duration of the PPDU + the SIFS + and the transmission duration of the ACK frame) occupied by the STA 1 on the primary 40 MHz channel (including the P40) through the CTS-to-self frame this time.

Detailed process of the EDCA in the present disclosure is shown in FIG. 1 to FIG. 2, which is not repeated herein.

**The process of contention for access to the secondary channel in the second mode is described.** The process is illustrated using an example where the channel occupancy duration is represented by the NAV and the first channel access mode is the OBO.

The first wireless device receives channel occupancy information interacted by the second wireless device on the primary channel, for example, the CTS-to-self frame, the RTS frame, or the CTS frame. The first wireless device contends for access to the secondary channel based on the first mode. At most one first wireless device can successfully transmit over a secondary channel. The transmission duration of the first wireless device on the secondary channel is less than or equal to the transmission duration of the second wireless device on the primary channel.

The first wireless device is the STA 520 shown in FIG. 5, using an example where the first wireless device is the UHR STA. The second wireless device is the AP 510 or the STA 520 shown in FIG. 5, using an example where the second wireless device is the STA.

The first wireless device contends for access to the secondary channel based on the OBO. The first wireless device prepares to transmitting data upon gaining an access right to a secondary channel based on the OBO, performs the CCA on the secondary channel within the SIFS, and detects whether the secondary channel is in the idle state within the SIFS. In a case where the secondary channel is in the idle state within the SIFS, the first wireless device transmits data after the SIFS. For example, the data is the uplink PPDU. In a case where the secondary channel is in the busy state within the SIFS, the first wireless device does not transmit data. In a case where the first wireless device does not gain an access right to any secondary channel based on the OBO, the first wireless device does not transmit data.

In some embodiments, a MCS to be used in transmitting a data field in the PPDU is indicated in a preamble of the PPDU transmitted by the first wireless device over the secondary channel. For example, the first wireless device transmits an uplink PPDU over the secondary channel, and the uplink PPDU is in a multi-users (MU) PPDU format.

In some embodiments, the NAV value is set based on the Duration field in the channel occupancy information. For example, the first wireless device receives the CTS-to-self frame interacted (transmitted or received) by the second wireless device on the primary channel, and the first wireless device determines the NAV value of the primary channel based on the value indicated by the Duration field in the CTS-to-self frame. That is, the NAV timer maintained by the first wireless device is updated based on the Duration field in the CTS-to-self frame. For example, the first wireless device receives the RTS frame interacted by the second wireless device on the primary channel, and the first wireless device determines the NAV value of the primary channel based on the value indicated by the Duration field in the RTS frame, that is, the NAV timer maintained by the first wireless device is updated based on the Duration field in the RTS frame. For example, the first wireless device receives the CTS frame interacted by the second wireless device on the primary channel, and the first wireless device determines the NAV value of the primary channel based on the value indicated by the Duration field in the CTS frame, that is, the NAV timer maintained by the first wireless device is updated based on the Duration field in the CTS frame.

For the method for organizing secondary channels and the detailed process of the OBO, reference may be made to related description in the first mode, which is not repeated herein.

**The process of contention for access to the secondary channel in the third mode is described.** The process is illustrated using an example where the channel occupancy duration is represented by the NAV and the second channel access mode is the EDCA.

The first wireless device receives channel occupancy information interacted by the second wireless device on the primary channel, for example, the CTS-to-self frame, the RTS frame, or the CTS frame. The first wireless device contends for access to the secondary channel based on the first mode. At most one first wireless device can successfully transmit over a secondary channel. The transmission duration of the first wireless device on the secondary channel is less than or equal to the transmission duration of the second wireless device on the primary channel.

The first wireless device is the STA 520 shown in FIG. 5, using an example where the first wireless device is the UHR STA. The second wireless device is the AP 510 or the STA 520 shown in FIG. 5, using an example where the second wireless device is the STA.

The first wireless device contends for access to the secondary channel based on the EDCA. The detail process of the EDCA is described above. The first wireless device prepares to transmit data upon gaining an access right to a secondary channel based on the EDCA. For example, the data is the uplink PPDU.

In some embodiments, an MCS to be used in transmitting a data field in the PPDU is indicated in a preamble of the PPDU transmitted by the first wireless device over the secondary channel. For example, the first wireless device transmits an uplink PPDU over the secondary channel, and the uplink PPDU is in a multi-users (MU) PPDU format.

In some embodiments, the NAV value is set based on the Duration field in the channel occupancy information. For example, the first wireless device receives the CTS-to-self frame interacted (transmitted or received) by the second wireless device on the primary channel, and the first wireless device determines the NAV value of the primary channel based on the value indicated by the Duration field in the CTS-to-self frame. That is, the NAV timer maintained by the first wireless device is updated based on the Duration field in the CTS-to-self frame. For example, the first wireless device receives the RTS frame interacted by the second wireless device on the primary channel, and the first wireless device determines the NAV value of the primary channel based on the value indicated by the Duration field in the RTS frame, that is, the NAV timer maintained by the first wireless device is updated based on the Duration field in the RTS frame. For example, the first wireless device receives the CTS frame interacted by the second wireless device on the primary channel, and the first wireless device determines the NAV value of the primary channel based on the value indicated by the Duration field in the CTS frame, that is, the NAV timer maintained by the first wireless device is updated based on the Duration field in the CTS frame.

For the method for organizing secondary channels and the detailed process of the EDCA, reference may be made to related description in the first mode, which is not repeated herein.

**The process of contention for access to the secondary channel in the fourth mode is described.** The process is illustrated using an example where the channel occupancy duration is represented by the NAV and the second channel access mode is the EDCA.

The first wireless device receives channel occupancy information interacted by the second wireless device on the primary channel, for example, the CTS-to-self frame, the RTS frame, or the CTS frame. The first wireless device contends for access to a secondary channel group based on the fourth mode. The secondary channel group is a group of secondary channels, and includes at least two secondary channels. That is, the fourth mode includes a secondary channel group. The first wireless device considers at least two secondary channels as a whole and contends based on the EDCA mode. At most one first wireless device can successfully transmit on a secondary channel group. transmission duration of the first wireless device on the secondary channel group is less than or equal to the transmission duration of the second wireless device on the primary channel.

Simply, the fourth mode is to contend for access to the secondary channel group by the second channel access scheme, and the third mode is to contend for access to the secondary channel by the second channel access scheme. Therefore, the fourth mode is a changed mode of the third mode. In fact, the fourth mode can also be understood as the third mode, and the fourth mode and the third mode differ in that the objects of access to are different.

The method for organization secondary channel groups is predefined or preconfigured, or is indicated by the access point, or autonomously determined by the first wireless device.

The first wireless device is the STA 520 shown in FIG. 5, using an example where the first wireless device is the UHR STA. The second wireless device is the AP 510 or the STA 520 shown in FIG. 5, using an example where the second wireless device is the STA.

The first wireless device contends for access to the secondary channel based on the EDCA. The detail process of the EDCA is described above. The first wireless device prepares to transmit data upon gaining an access right to a secondary channel based on the EDCA. For example, the data is the uplink PPDU.

In some embodiments, an MCS to be used in transmitting a data field in the PPDU is indicated in a preamble of the PPDU transmitted by the first wireless device over the secondary channel. For example, the first wireless device transmits an uplink PPDU over the secondary channel, and the uplink PPDU is in a multi-users (MU) PPDU format.

In some embodiments, the NAV value is set based on the Duration field in the channel occupancy information. For example, the first wireless device receives the CTS-to-self frame interacted (transmitted or received) by the second wireless device on the primary channel, and the first wireless device determines the NAV value of the primary channel based on the value indicated by the Duration field in the CTS-to-self frame. That is, the NAV timer maintained by the first wireless device is updated based on the Duration field in the CTS-to-self frame. For example, the first wireless device receives the RTS frame interacted by the second wireless device on the primary channel, and the first wireless device determines the NAV value of the primary channel based on the value indicated by the Duration field in the RTS frame, that is, the NAV timer maintained by the first wireless device is updated based on the Duration field in the RTS frame. For example, the first wireless device receives the CTS frame interacted by the second wireless device on the primary channel, and the first wireless device determines the NAV value of the primary channel based on the value indicated by the Duration field in the CTS frame, that is, the NAV timer maintained by the first wireless device is updated based on the Duration field in the CTS frame.

The method for organizing secondary channel groups is similar to related description in the first mode, which only differs in that the secondar channel group includes at least two secondary channels, and a plurality of secondary channels in the secondary channel group are adjacent secondary channels or nonadjacent secondary channels (for example, the S20-1 and the S20-2 are adjacent secondary channels in the frequency domain, and the S20-1 and the S20-3 are nonadjacent secondary channels in the frequency domain). For the detailed process of the EDCA, reference may be made to related description in the first mode, which is not repeated herein.

FIG. 14 is a flowchart of a method for contention-based access to a secondary channel according to some embodiments of the present disclosure. The embodiments are illustrated using an example where the method is applicable to an access point. The method includes at least part of the following process.

**In S142,** a supported secondary channel access mode is indicated.

The access point indicates the supported secondary channel access mode based on capability information. The capability information is carried in a management frame for transmission. The management frame includes at least one of a probe response frame (Probe Response), an association response frame (Association Response), a reassociation response frame (ReAssociation Response), a beacon (Beacon) frame, an action (Action) frame.

The access point is the STA 520 shown in FIG. 5.

The secondary channel access mode shown in the present disclosure includes at least one of:
- a first mode, wherein in a case where a channel occupancy duration of the primary channel satisfies a first condition, access to the secondary channel is contended for based on a first channel access scheme; and in a case where the channel occupancy duration of the primary channel satisfies a second condition, access to the secondary channel is contended for based on a second channel access scheme;
- a second mode, wherein access to the secondary channel is contended for based on a first channel access scheme;
- a third mode, wherein access to the secondary channel is contended for based on a second channel access scheme; or
- a fourth mode, wherein access to a group of secondary channels is contended for based on a second channel access scheme, wherein the group of secondary channels includes at least two secondary channels.

In some embodiments, the channel occupancy information includes at least one of a CTS-to-self frame, an RTS frame, or a CTS frame.

In some embodiments, the first condition includes at least one of: the channel occupancy duration of the primary channel being less than a first threshold, or the channel occupancy duration of the primary channel being equal to a first threshold.

In some embodiments, the second condition includes at least one of: the channel occupancy duration of the primary channel being greater than a second threshold, or the channel occupancy duration of the primary channel being equal to a second threshold.

The first threshold is less than or equal to the second threshold.

In some embodiments, the first threshold is predefined or preconfigured, or is indicated by an access point, and the second threshold is predefined or preconfigured, or is indicated by the access point.

In some embodiments, the channel occupancy duration is represented by a NAV.

In some embodiments, the NAV is set based on a Duration field in the channel occupancy information.

In some embodiments, an access duration required for the first channel access scheme is less than an access duration required for the second channel access scheme. That is, a speed for channel access in the first channel access scheme is greater than a speed for channel access in the second channel access scheme.

In some embodiments, a collision-avoidance capability of the second channel access scheme is greater than a collision-avoidance capability of the first channel access scheme. That is, a number of processes of channel detection in the second channel access scheme is greater than a number of processes of channel detection in the first channel access scheme. That is, a probability of channel collision in the second channel access scheme is lower than a probability of channel collision in the first channel access scheme.

In some embodiments, he first channel access scheme includes OBO.

In some embodiments, the second channel access scheme includes at least one of EDCA, a distributed coordination function (DCF), or a hybrid coordination function (HCF).

In some embodiments, the secondary channel accessed in the first mode, the second mode, and the third mode is a single secondary channel.

In some embodiments, a bandwidth of the secondary channel is a fixed value (BWr), and a number of secondary channels is determined based on at least one of an operating bandwidth (BW) of an access point, a bandwidth (BWp) of the primary channel, or the fixed value (BWr).

In some embodiments, the number of secondary channels is equal to (BW-BWp)/BWr.

In some embodiments, a bandwidth of the secondary channel is a dynamic value (BWi), wherein the dynamic value (BWi) is determined based on at least one of a total operating BW of an access point, a BWp of the primary channel, or a number (Nsta) of first wireless devices.

In some embodiments, the Nsta of first wireless devices is broadcasted by the access point.

In some embodiments, the secondary channel access mode is supported by at least one of the first wireless device or the second wireless device.

In some embodiments, the secondary channel access mode includes at least one of a default secondary channel access mode of an access point, a secondary channel access mode indicated by the access point, or a secondary channel access mode changed by the access point.

**In S144,** whether to enable or disable a secondary channel access function is indicated.

The access point indicates enabling of the secondary channel access function by transmitting the management frame, which means that the first wireless device is allowed to be accessed to the secondary channel through the secondary channel access mode. The management frame includes at least one of a probe response frame, an association response frame, a reassociation response frame, a beacon frame, an action frame.

In a case where the access point indicates enabling of the secondary channel access function, a default secondary channel access mode is used. The access point indicates through a management frame that the BSS where the access point is located currently uses the default secondary channel access mode. For example, the access point enables the secondary channel access function, defaults to the first mode, transmits the beacon frame to the first wireless device, and instructs the first wireless device to contend for access to the secondary channel through the first mode. The management frame includes at least one of a probe response frame, an association response frame, a reassociation response frame, a beacon frame, an action frame.

The access point indicates disenabling of the secondary channel access function by transmitting the management frame, which means that the first wireless device is disallowed to be accessed to the secondary channel through the secondary channel access mode. The management frame includes at least one of a probe response frame, an association response frame, a reassociation response frame, a beacon frame, an action frame.

**In S146,** a current secondary channel access mode is indicated.

The access point indicates the current secondary channel access mode by transmitting the management frame. The management frame includes at least one of a probe response frame, an association response frame, a reassociation response frame, a beacon frame, an action frame.

In some embodiments, indication of the current secondary channel access mode means change of the current secondary channel access mode.

In some embodiments, the access point changes the current secondary channel access mode by the management frame based on the total operating bandwidth BW of the BSS where the access point is located and/or the number of first wireless devices (that is, stations supporting different secondary channel access modes) in the BSS where the access point is located.

Illustratively, the total operating bandwidth BW of the BSS where the access point is located is 160 MHz, the number of first wireless devices supporting the third mode in the BSS where the access point is located is greater than the number of first wireless devices supporting the first mode, and thus the access point indicates that the current secondary channel access mode is the third mode over the management frame. In a case where the total operating bandwidth BW of the BSS where the access point is located changes, and/or the number of first wireless devices in the BSS where the access point is located (that is, the stations supporting different secondary channel access modes) changes, for example, the total operating bandwidth BW of the BSS where the access point is located changes to 40 MHz, and the number of first wireless devices supporting the second mode in the BSS where the access point is located is greater than the number of first wireless devices supporting the third mode, the access point changes the current secondary channel access mode from the third mode to the second mode over the management frame.

In summary, in the method according to the present disclosure, in a case where the channel occupancy information is interacted on the primary channel, the first wireless device still contends for access to the secondary channel in the idle state to avoid waste of secondary channel resources. In addition, the secondary channel access mode clearly defines how to contend for access to the channel. In different cases or with different needs, access to the secondary channel is contended for based on different secondary channel access modes, such that the flexibility of access to the secondary channel is improved. In addition, the method for organizing secondary channels is provided to support organizing the bandwidths and numbers of secondary channels using different methods in different scenarios, such that the flexibility of access to the secondary channel is further improved. In addition, the access point indicates or changes the secondary channel mode based on the operating bandwidth and the number of first wireless devices, such that the flexibility of using the secondary channel is further improved, the waste of secondary channel resources in different scenarios is avoided, and the transmission requirements of the first wireless device in different scenarios are met.

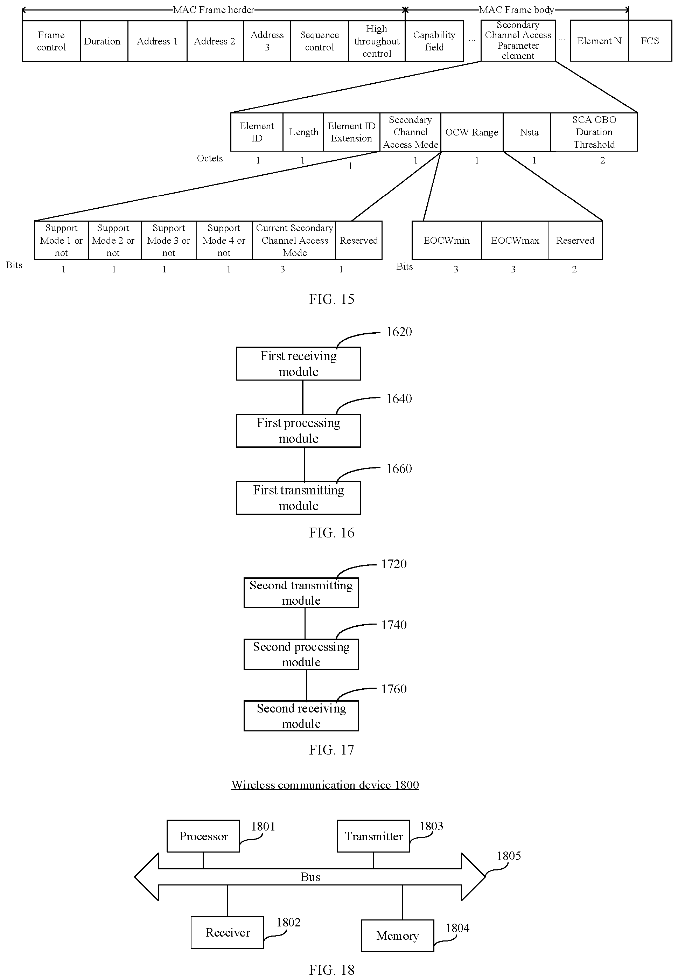

FIG. 15 is a schematic diagram of a format of a Secondary Channel Access Mode Indication element according to some embodiments of the present disclosure. The Secondary Channel Access Mode Indication element is also referred to as a Secondary Channel Access Parameter element.

In some embodiments, the Secondary Channel Access Parameter element is transmitted by the first wireless device. The first wireless device carries the Secondary Channel Access Parameter element in the probe request frame, and/or the association request frame, and/or the reassociation request frame.

In some embodiments, the Secondary Channel Access Parameter element is transmitted by the second wireless device. The second wireless device carries the Secondary Channel Access Parameter element in the probe request frame, and/or the association request frame, and/or the reassociation request frame, and/or the probe response frame, and/or the association response frame, and/or the reassociation response frame, and/or the beacon frame, and/or the action frame.

A Support Mode 1 or not field indicates whether the station or the access point supports the first mode. In some embodiments, in a case where the Support Mode 1 or not field is set to a first value, the station or the access point supports the first mode; and in a case where the Support Mode 1 or not field is set to a second value, the station or the access point does not support the first mode. Illustratively, in a case where the Support Mode 1 or not field is set to 1, the station or the access point supports the first mode; and in a case where the Support Mode 1 or not field is set to 0, the station or the access point does not support the first mode.

A Support Mode 2 or not field indicates whether the station or the access point supports the second mode. In some embodiments, in a case where the Support Mode 2 or not field is set to a first value, the station or the access point supports the second mode; and in a case where the Support Mode 2 or not field is set to a second value, the station or the access point does not support the second mode. Illustratively, in a case where the Support Mode 2 or not field is set to 1, the station or the access point supports the second mode; and in a case where the Support Mode 2 or not field is set to 0, the station or the access point does not support the second mode.

A Support Mode 3 or not field indicates whether the station or the access point supports the third mode. In some embodiments, in a case where the Support Mode 3 or not field is set to a first value, the station or the access point supports the third mode; and in a case where the Support Mode 3 or not field is set to a second value, the station or the access point does not support the third mode. Illustratively, in a case where the Support Mode 3 or not field is set to 1, the station or the access point supports the third mode; and in a case where the Support Mode 3 or not field is set to 0, the station or the access point does not support the third mode.

A Support Mode 4 or not field indicates whether the station or the access point supports the fourth mode. In some embodiments, in a case where the Support Mode 4 or not field is set to a first value, the station or the access point supports the fourth mode; and in a case where the Support Mode 4 or not field is set to a second value, the station or the access point does not support the fourth mode. Illustratively, in a case where the Support Mode 4 or not field is set to 1, the station or the access point supports the fourth mode; and in a case where the Support Mode 4 or not field is set to 0, the station or the access point does not support the fourth mode.

It should be understood that when the secondary channel access mode is more than the first mode, the second mode, the third mode, and the fourth mode in the present disclosure, the fields in the Secondary Channel Access Parameter element are also adjusted accordingly. For example, in a case where the secondary channel access mode includes a fifth mode, a Support Mode 5 or not field is added to the Secondary Channel Access Parameter element. The format of the Secondary Channel Access Parameter element according to the present disclosure is an exemplary illustration and does not limit the format of the Secondary Channel Access Mode Indication element.

A Current Secondary Channel Access Mode field indicates a secondary channel access mode currently used by the BSS where the first wireless device and/or the second wireless device. In some embodiments, in a case where the Current Secondary Channel Access Mode field is set to a first value, the secondary channel access function is disabled or turned off; in a case where the Current Secondary Channel Access Mode field is set to a second value, the secondary channel access function is enabled or turned on; and in a case where the Current Secondary Channel Access Mode field is set to a third value, the field is reserved.

Illustratively, in a case where the Current Secondary Channel Access Mode field is set to 0, the secondary channel access function is disabled or turned off; in a case where the Current Secondary Channel Access Mode field is set to 1, 2, 3, or 4, the secondary channel access function is enabled or turned on, where "1" represents enabling of support in the first mode, "2" represents enabling of support in the second mode, "3" represents enabling of support in the third mode, "4" represents enabling of support in the fourth mode; and in a case where the Current Secondary Channel Access Mode field is set to 5, 6, or 7, the field is reserved.

Illustratively, in a case where the Current Secondary Channel Access Mode field is set to 7, the secondary channel access function is disabled or turned off; in a case where the Current Secondary Channel Access Mode field is set to 0, 1, 2, or 3, the secondary channel access function is enabled or turned on, where "0" represents enabling of support in the first mode, "1" represents enabling of support in the second mode, "2" represents enabling of support in the third mode, "3" represents enabling of support in the fourth mode; and in a case where the Current Secondary Channel Access Mode field is set to 4, 5, or 6, the field is reserved.

A EOCWmin field indicates a minimum OCWmin of a secondary channel access OCW. OCWmin=2^{EOCWmin}-1.

A EOCWmax indicates a maximum OCWmax of a secondary channel access OCW. OCWmax=2^{EOCWmax}-1.

A Nsta field indicates a number of first wireless devices supporting the current secondary channel access mode in the BSS where the first wireless device and/or the second wireless device, that is, a number of stations supporting the current secondary channel access mode.

A SCA OBO Duration Threshold field indicates an upper limit of a transmission duration of the first wireless device contending for access to the secondary channel using the first channel access scheme, in microseconds.

In some embodiments, the access point carries the Secondary Channel Access Parameter element in the probe response frame, and/or the association response frame, and/or the reassociation response frame, and/or the beacon frame, and/or the action frame for transmission. The value of the SCA OBO Duration Threshold field is the value of a variable dot1l SCAOBODurationThreshold of the access point.

In some embodiments, the Secondary Channel Access Parameter element is transmitted by the station, and the SCA OBO Duration Threshold field is reserved.

In some embodiments, the station sets its own variable dot11SCAOBODurationThreshold based on the value of the SCA OBO Duration Threshold field in the received Secondary Channel Access Parameter element.

The numbers below the field in FIG. 15 represents the number of bytes or bits occupied by the field, and bytes are represented using the Internet standard Octet.

FIG. 16 is a block diagram of an apparatus for contention-based access to a secondary channel according to some embodiments of the present disclosure. The apparatus includes at least part of a first receiving module 1620, a first processing module 1640, or a first transmitting module 1660.

The first receiving module 1620 is configured to receive channel occupancy information interacted by a second wireless device on a primary channel.

The first processing module 1640 is configured to contend for access to the secondary channel in an idle state based on a secondary channel access mode upon receiving channel occupancy information interacted by a second wireless device on a primary channel,
wherein the primary channel and the secondary channel are a group of bound channels.

In some embodiments, the secondary channel access mode includes a first mode,
wherein the first mode includes the following cases:
in a case where a channel occupancy duration of the primary channel satisfies a first condition, access to the secondary channel is contended for based on a first channel access scheme; and
in a case where the channel occupancy duration of the primary channel satisfies a second condition, access to the secondary channel is contended for based on a second channel access scheme;
wherein an access duration required for the first channel access scheme is less than an access duration required for the second channel access scheme.

In some embodiments, a collision-avoidance capability of the second channel access scheme is greater than a collision-avoidance capability of the first channel access scheme.

In some embodiments, the first condition includes at least one of: the channel occupancy duration of the primary channel being less than a first threshold, or the channel occupancy duration of the primary channel being equal to a first threshold; and
the second condition includes at least one of: the channel occupancy duration of the primary channel being greater than a second threshold, or the channel occupancy duration of the primary channel being equal to a second threshold;
wherein the first threshold is less than or equal to the second threshold.

In some embodiments, the first threshold is predefined or preconfigured, or is indicated by an access point, and the second threshold is predefined or preconfigured, or is indicated by the access point.

In some embodiments, the channel occupancy duration is indicated by a NAV or a Duration field in the channel occupancy information.

In some embodiments, the secondary channel access mode includes a second mode, wherein the second mode includes a case that access to the secondary channel is contended for based on a first channel access scheme.

In some embodiments, the secondary channel access mode includes a third mode, wherein the third mode includes a case that access to the secondary channel is contended for based on a second channel access scheme.

In some embodiments, the secondary channel is a single secondary channel.

In some embodiments, the secondary channel access mode includes a fourth mode, wherein the fourth mode includes a case that access to a group of secondary channels is contended for based on a second channel access scheme, wherein the group of secondary channels includes at least two secondary channels.

In some embodiments, the first channel access scheme includes OBO.

In some embodiments, the second channel access scheme includes at least one of EDCA, a DCF, or an HCF.

In some embodiments, a bandwidth of the secondary channel is a fixed value BWr, and a number of secondary channels is determined based on at least one of an operating bandwidth BW of an access point, a bandwidth BWp of the primary channel, or the fixed value BWr.

In some embodiments, the number of secondary channels is equal to (BW-BWp)/BWr.

In some embodiments, a bandwidth of the secondary channel is a dynamic value BWi, wherein the dynamic value BWi is determined based on at least one of a total operating bandwidth BW of an access point, a bandwidth BWp of the primary channel, or a number Nsta of first wireless devices.

In some embodiments, the number Nsta of first wireless devices is broadcasted by the access point.

In some embodiments, the secondary channel access mode is supported by at least one of the first wireless device or the second wireless device.

In some embodiments, the secondary channel access mode includes at least one of a default secondary channel access mode of an access point, a secondary channel access mode indicated by the access point, or a secondary channel access mode changed by the access point.

In some embodiments, the first receiving module 1620 is configured to receive a management frame from the access point, wherein the management frame indicates and/or changes the secondary channel access mode.

In some embodiments, the channel occupancy information includes at least one of a CTS-to-self frame, an RTS frame, or a CTS frame.

In some embodiments, the first transmitting module 1660 is configured to indicate the supported secondary channel access mode.

In some embodiments, the first transmitting module 1660 is configured to transmit data on the accessed secondary channel.

In some embodiments, the first transmitting module 1660 is configured to transmit the probe request frame, and/or the association request frame, and/or the reassociation request frame.

In some embodiments, the first receiving module 1620 is configured to receive the acknowledge frame of the access frame.

In some embodiments, the first processing module 1640 is configured to determine successful transmission or failed transmission based on the received or unreceived acknowledge frame.

In some embodiments, the first processing module 1640 is configured to calculate the bandwidth of the secondary channel and/or the number of secondary channels.

In some embodiments, the second wireless device includes an access point or a station.

In summary, in a case where the apparatus according to the embodiments interacts channel occupancy information on the primary channel, the apparatus according to the embodiments still contends for access to the secondary channel in the idle state to avoid waste of secondary channel resources. In addition, the secondary channel access mode clearly defines how to contend for access to the channel.

FIG. 17 is a block diagram of an apparatus for contention-based access to a secondary channel according to some embodiments of the present disclosure. The apparatus includes at least part of a second transmitting module 1720, a second processing module 1740, or a second receiving module 1760.

The second transmitting module 1720 is configured to transmit a management frame to a first wireless device, wherein the management frame indicates and/or changes a secondary channel access mode.

In some embodiments, the secondary channel access mode includes a first mode,
wherein the first mode includes the following cases:
in a case where a channel occupancy duration of a primary channel satisfies a first condition, access to the secondary channel is contended for based on a first channel access scheme; and
in a case where the channel occupancy duration of the primary channel satisfies a second condition, access to the secondary channel is contended for based on a second channel access scheme;
wherein an access duration required for the first channel access scheme is less than an access duration required for the second channel access scheme.

In some embodiments, a collision-avoidance capability of the second channel access scheme is greater than a collision-avoidance capability of the first channel access scheme.

In some embodiments, the first condition includes at least one of: the channel occupancy duration of the primary channel being less than a first threshold, or the channel occupancy duration of the primary channel being equal to a first threshold; and
the second condition includes at least one of: the channel occupancy duration of the primary channel being greater than a second threshold, or the channel occupancy duration of the primary channel being equal to a second threshold;
wherein the first threshold is less than or equal to the second threshold.

In some embodiments, the second transmitting module 1720 is further configured to transmit the management frame to the first wireless device, wherein the management frame indicates the first threshold and/or the second threshold.

In some embodiments, the channel occupancy duration is indicated by a NAV or a Duration field in the channel occupancy information.

In some embodiments, the secondary channel access mode includes a second mode, wherein the second mode includes a case that access to the secondary channel is contended for based on a first channel access scheme.

In some embodiments, the secondary channel access mode includes a third mode, wherein the third mode includes a case that access to the secondary channel is contended for based on a second channel access scheme.

In some embodiments, the secondary channel is a single secondary channel.

In some embodiments, the secondary channel access mode includes a fourth mode, wherein the fourth mode includes a case that access to a group of secondary channels is contended for based on a second channel access scheme, wherein the group of secondary channels includes at least two secondary channels.

In some embodiments, the first channel access scheme includes OBO.

In some embodiments, the second channel access scheme includes at least one of EDCA, a DCF, or an HCF.

In some embodiments, the second transmitting module 1720 is further configured to broadcast a number Nsta of first wireless devices.

In some embodiments, the secondary channel access mode is supported by at least one of the first wireless device or a second wireless device.

In some embodiments, the second receiving module 1760 is configured to receive channel occupancy information and/or data.

In some embodiments, the second transmitting module 1720 is further configured to transmit channel occupancy information and/or data and/or the acknowledge frame on a primary channel.

In some embodiments, the channel occupancy information includes at least one of a CTS-to-self frame, an RTS frame, or a CTS frame.

In some embodiments, the second processing module 1740 is configured to enable, disable, turn off, determine, or change the secondary channel access mode.

In some embodiments, the second processing module 1740 is configured to determine or change the current secondary channel access mode based on the operating bandwidth of the BSS and the number of first wireless devices.

In some embodiments, the second transmitting module 1720 is further configured to transmit the probe response frame, and/or the association response frame, and/or the reassociation response frame, and/or the management frame.

In some embodiments, the second processing module 1740 is configured to organize the number of secondary channels and/or the bandwidth of the secondary channel and/or the secondary channel group.

In summary, in the method according to the present disclosure, in a case where the channel occupancy information is interacted on the primary channel, the first wireless device still contends for access to the secondary channel in the idle state to avoid waste of secondary channel resources. In addition, the secondary channel access mode clearly defines how to contend for access to the channel. In different cases or with different needs, access to the secondary channel is contended for based on different secondary channel access modes, such that the flexibility of access to the secondary channel is improved. In addition, the method for organizing secondary channels is provided to support organizing the bandwidths and numbers of secondary channels using different methods in different scenarios, such that the flexibility of access to the secondary channel is further improved. In addition, the access point indicates or changes the secondary channel mode based on the operating bandwidth and the number of first wireless devices, such that the flexibility of using the secondary channel is further improved, the waste of secondary channel resources in different scenarios is avoided, and the transmission requirements of the first wireless device in different scenarios are met.

It should be noted that, in a case where the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific scheme in which each module performs the operation has been described in detail in the embodiments related to the method and will not be described in detail herein.

FIG. 18 is a schematic structural diagram of a wireless communication device (an AP or a STA) according to some embodiments of the present disclosure. The wireless communication device 1800 includes: a processor 1801, a receiver 1802, a transmitter 1803, a memory 1804, and a bus 1805.

The processor 1801 includes one or more processing cores, and achieves various functional applications and information processing by running software programs and modules. In some embodiments, the processor 1801 is configured to perform the functions and processes of the first processing module 1640 and/or the second processing module 1710.

The receiver 1802 and the transmitter 1803 are practiced as a communication assembly. The communication assembly is a communication chip. In some embodiments, the receiver 1802 is configured to perform the functions and processes of the first receiving module 1620 and/or the second receiving module 1760. In some embodiments, the transmitter 1803 is configured to perform the functions and processes of the first transmitting module 1660 and/or the second transmitting module 1720.

The memory 1804 is connected to the processor 1801 over the bus 1805. The memory 1804 is configured to store one or more instructions, and the processor 1801 is configured to load and execute the one or more instructions to perform various processes in the above method embodiments.

In addition, the memory 1804 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the receiver 1802 separately receive signals/data, or the processor 1801 controls the receiver 1802 to receive signals/data, or the processor 1801 requests the receiver 1802 to receive signals/data, or the processor 1801 cooperates with the receiver 1802 to receive signals/data.

In some embodiments, the transmitter 1803 separately transmit signals/data, or the processor 1801 controls the transmitter 1803 to transmit signals/data, or the processor 1801 requests the transmitter 1803 to transmit signals/data, or the processor 1801 cooperates with the transmitter 1803 to transmit signals/data.

Some embodiments of the present disclosure further provide a computer-readable storage medium storing one or more computer programs, wherein the one or more computer programs, when loaded and run by a processor, cause the processor to perform the method for contention-based access to the secondary channel.

Some embodiments of the present disclosure further provide a chip. The chip includes programmable logic circuity and/or program instructions, wherein a sensing measurement device equipped with the chip, when running, is caused to perform the method for contention-based access to the secondary channel.

Some embodiments of the present disclosure further provide a computer program product. The computer program product, when loading and executing on a processor of a computer device, cause the computer device to perform the method for contention-based access to the secondary channel.

Some embodiments of the present disclosure further provide a computer program. The computer program includes one or more computer instructions, wherein the one or more computer instructions, when loading and executing on a processor of a computer device, cause the computer device to perform the method for contention-based access to the secondary channel.

It should be understood by those skilled in the art that in the above one or more embodiments, functions described in the embodiments of the present disclosure are practiced by the hardware, the software, the firmware or any combinations thereof. In a case where the functions are practiced by the software, the functions are stored in the computer-readable storage medium or are determined as one or more instructions or codes in the computer-readable storage medium for transmission. The computer-readable storage medium includes a computer storage medium and a communication medium, and the communication medium includes any medium facilitating transmission of the computer program from one place to another place. The storage medium is any available medium accessible by a general or specific computer.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for contention-based access to a secondary channel, applicable to a first wireless device, the method comprising:
contending for access to the secondary channel in an idle state based on a secondary channel access mode upon receiving channel occupancy information interacted by a second wireless device on a primary channel, wherein the primary channel and the secondary channel are a group of bound channels.

2. The method according to claim 1, wherein the secondary channel access mode comprises a first mode, wherein the first mode comprises the following cases:
in a case where a channel occupancy duration of the primary channel satisfies a first condition, access to the secondary channel is contended for based on a first channel access scheme; and
in a case where the channel occupancy duration of the primary channel satisfies a second condition, access to the secondary channel is contended for based on a second channel access scheme;
wherein an access duration required for the first channel access scheme is less than an access duration required for the second channel access scheme.

3. The method according to claim 2, wherein a collision-avoidance capability of the second channel access scheme is greater than a collision-avoidance capability of the first channel access scheme.

4. The method according to claim 3, wherein
the first condition comprises at least one of: the channel occupancy duration of the primary channel being less than a first threshold, or the channel occupancy duration of the primary channel being equal to a first threshold; and
the second condition comprises at least one of: the channel occupancy duration of the primary channel being greater than a second threshold, or the channel occupancy duration of the primary channel being equal to a second threshold;
wherein the first threshold is less than or equal to the second threshold.

5. The method according to claim 4, wherein the first threshold is predefined or preconfigured, or is indicated by an access point, and the second threshold is predefined or preconfigured, or is indicated by the access point.

6. The method according to any one of claims 2 to 5, wherein the channel occupancy duration is represented by a network allocation vector (NAV).

7. The method according to claim 1, wherein the secondary channel access mode comprises a second mode, wherein the second mode comprises a case where access to the secondary channel is contended for based on a first channel access scheme.

8. The method according to claim 1, wherein the secondary channel access mode comprises a third mode, wherein the third mode comprises a case where access to the secondary channel is contended for based on a second channel access scheme.

9. The method according to any one of claims 2 to 8, wherein the secondary channel is a single secondary channel.

10. The method according to claim 1, wherein the secondary channel access mode comprises a fourth mode, wherein the fourth mode comprises a case where access to a group of secondary channels is contended for based on a second channel access scheme, wherein the group of secondary channels comprises at least two secondary channels.

11. The method according to any one of claims 2 to 10, wherein the first channel access scheme comprises orthogonal frequency division multiple access (OFDMA) backoff (OBO).

12. The method according to any one of claims 2 to 11, wherein the second channel access scheme comprises at least one of enhanced distributed channel access (EDCA), a distributed coordination function (DCF), or a hybrid coordination function (HCF).

13. The method according to any one of claims 1 to 12, wherein a bandwidth of the secondary channel is a fixed value (BWr), and a number of secondary channels is determined based on at least one of an operating bandwidth (BW) of an access point, a bandwidth (BWp) of the primary channel, or the fixed value (BWr).

14. The method according to claim 13, wherein the number of secondary channels is equal to (BW-BWp)/BWr.

15. The method according to any one of claims 1 to 12, wherein a bandwidth of the secondary channel is a dynamic value (BWi), wherein the dynamic value (BWi) is determined based on at least one of a total operating bandwidth (BW) of an access point, a bandwidth (BWp) of the primary channel, or a number (Nsta) of first wireless devices.

16. The method according to claim 15, wherein the number (Nsta) of first wireless devices is broadcasted by the access point.

17. The method according to any one of claims 1 to 16, wherein the secondary channel access mode is supported by at least one of the first wireless device or the second wireless device.

18. The method according to any one of claims 1 to 17, wherein the secondary channel access mode comprises at least one of a default secondary channel access mode of an access point, a secondary channel access mode indicated by the access point, or a secondary channel access mode changed by the access point.

19. The method according to claim 18, further comprising:
receiving a management frame from the access point, wherein the management frame is used for indicating and/or changing the secondary channel access mode.

20. The method according to any one of claims 1 to 19, wherein the channel occupancy information comprises at least one of a clear-to-send (CTS)-to-self frame, a request-to-send (RTS) frame, or a CTS frame.

21. The method according to any one of claims 1 to 20, wherein the second wireless device comprises an access point or a station.

22. A method for contention-based access to a secondary channel, applicable to an access point, the method comprising:
transmitting a management frame to a first wireless device, wherein the management frame is used for indicating and/or changing a secondary channel access mode.

23. The method according to claim 22, wherein the secondary channel access mode comprises a first mode, wherein the first mode comprises the following cases:
in a case where a channel occupancy duration of a primary channel satisfies a first condition, access to the secondary channel is contended for based on a first channel access scheme; and
in a case where the channel occupancy duration of the primary channel satisfies a second condition, access to the secondary channel is contended for based on a second channel access scheme;
wherein an access duration required for the first channel access scheme is less than an access duration required for the second channel access scheme.

24. The method according to claim 23, wherein a collision-avoidance capability of the second channel access scheme is greater than a collision-avoidance capability of the first channel access scheme.

25. The method according to claim 24, wherein
the first condition comprises at least one of: the channel occupancy duration of the primary channel being less than a first threshold, or the channel occupancy duration of the primary channel being equal to a first threshold; and
the second condition comprises at least one of: the channel occupancy duration of the primary channel being greater than a second threshold, or the channel occupancy duration of the primary channel being equal to a second threshold;
wherein the first threshold is less than or equal to the second threshold.

26. The method according to any one of claims 23 to 25, further comprising:
transmitting the management frame to the first wireless device, wherein the management frame indicates at least one of the first threshold or the second threshold.

27. The method according to any one of claims 23 to 26, wherein the channel occupancy duration is represented by a network allocation vector (NAV).

28. The method according to claim 22, wherein the secondary channel access mode comprises a second mode, wherein the second mode comprises a case where access to the secondary channel is contended for based on a first channel access scheme.

29. The method according to claim 22, wherein the secondary channel access mode comprises a third mode, wherein the third mode comprises a case where access to the secondary channel is contended for based on a second channel access scheme.

30. The method according to any one of claims 23 to 29, wherein the secondary channel is a single secondary channel.

31. The method according to claim 22, wherein the secondary channel access mode comprises a fourth mode, wherein the fourth mode comprises a case where access to a group of secondary channels is contended for based on a second channel access scheme, wherein the group of secondary channels comprises at least two secondary channels.

32. The method according to any one of claims 23 to 31, wherein the first channel access scheme comprises orthogonal frequency division multiple access (OFDMA) backoff (OBO).

33. The method according to any one of claims 23 to 32, wherein the second channel access scheme comprises at least one of enhanced distributed channel access (EDCA), a distributed coordination function (DCF), or a hybrid coordination function (HCF).

34. The method according to any one of claims 22 to 33, further comprising:
broadcasting a number (Nsta) of the first wireless devices.

35. The method according to any one of claims 22 to 34, wherein the secondary channel access mode is supported by at least one of the first wireless device or a second wireless device.

36. The method according to any one of claims 22 to 35, further comprising:
receiving or transmitting channel occupancy information on a primary channel.

37. The method according to claim 36, wherein the channel occupancy information comprises at least one of a clear-to-send (CTS)-to-self frame, a request-to-send (RTS) frame, or a CTS frame.

38. An apparatus for contention-based access to a secondary channel, comprising:
a first receiving module, configured to contend for access to the secondary channel in an idle state based on a secondary channel access mode upon receiving channel occupancy information interacted by a second wireless device on a primary channel, wherein the primary channel and the secondary channel are a group of bound channels.

39. An apparatus for contention-based access to a secondary channel, comprising:
a first transmitting module, configured to transmit a management frame to a first wireless device, wherein the management frame is used for indicating and/or changing a secondary channel access mode.

40. A wireless device, comprising:
a processor;
a transceiver connected to the processor; and
a memory configured to store one or more executable instructions by the processor; wherein the processor is configured to load and execute the one or more executable instructions to cause the wireless device to perform the method for contention-based access to the secondary channel as defined in any one of claims 1 to 21 or 22 to 37.

41. A computer-readable storage medium, storing one or more executable instructions, wherein the one or more runnable instructions, when loaded and run by a processor, cause the processor to perform the method for contention-based access to the secondary channel as defined in any one of claims 1 to 21 or 22 to 37.

42. A chip, comprising: programmable logical circuity and/or one or more computer instructions, wherein the chip is configured to perform the method for contention-based access to the secondary channel as defined in any one of claims 1 to 21 or 22 to 37.

43. A computer program product, comprising one or more computer instructions, wherein the one or more computer instructions are stored in a computer-readable storage medium, and when read and executed by a processor of a computer device, cause the computer device to perform the method for contention-based access to the secondary channel as defined in any one of claims 1 to 21 or 22 to 37.

44. A computer program, comprising: one or more computer instructions, wherein the one or more computer instructions, when loaded and executed by a processor of a computer device, cause the computer device to perform the method for contention-based access to the secondary channel as defined in any one of claims 1 to 21 or 22 to 37.
